(19) Europäisches Patentamt
European Patent Office
Office européen des brevets

(11) **EP 3 234 083 B1**

(12) **EUROPEAN PATENT SPECIFICATION**

(45) Date of publication and mention
of the grant of the patent:
**12.12.2018 Bulletin 2018/50**

(51) Int Cl.:
*C11B 13/00* $^{(2006.01)}$     *C11B 1/02* $^{(2006.01)}$

(21) Application number: **15820487.5**

(22) Date of filing: **18.12.2015**

(86) International application number:
**PCT/EP2015/080439**

(87) International publication number:
**WO 2016/097264 (23.06.2016 Gazette 2016/25)**

(54) **RECOVERY OF OIL FROM PALM SLUDGE**

RÜCKGEWINNUNG VON ÖL AUS PALMSCHLAMM

RÉCUPÉRATION D'HUILE À PARTIR DE BOUES DE PALME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2014 MY PI2014703901
19.12.2014 MY PI2014703902**

(43) Date of publication of application:
**25.10.2017 Bulletin 2017/43**

(73) Proprietor: **DuPont Nutrition Biosciences ApS
1411 Copenhagen K (DK)**

(72) Inventors:
• **SØE, Jørn Borch**
  **DK-8381 Tilst (DK)**
• **MIKKELSEN, René**
  **DK-8732 Hovedgård (DK)**
• **LEE, Lai See**
  **Singapore 129199 (SG)**
• **KJAER, Karina Hansen**
  **8541 Skødstrup (DK)**

(74) Representative: **D Young & Co LLP
120 Holborn
London EC1N 2DY (GB)**

(56) References cited:
**EP-A2- 0 070 269         WO-A1-2015/150372
AU-A4- 2015 101 376       KR-A- 20140 060 124
US-A1- 2014 039 180**

• **WANG ZUNSHENG ET AL: "High-loading oil palm
empty fruit bunch saccharification using
cellulases fromTrichoderma koningiiMF6",
PROCESS BIOCHEMISTRY, vol. 49, no. 4, 30
January 2014 (2014-01-30), pages 673-680,
XP028601687, ISSN: 1359-5113, DOI:
10.1016/J.PROCBIO.2014.01.024**
• **WU T Y ET AL: "A holistic approach to managing
palm oil mill effluent (POME): Biotechnological
advances in the sustainable reuse of POME",
BIOTECHNOLOGY ADVANCES, ELSEVIER
PUBLISHING, BARKING, GB, vol. 27, no. 1, 27
August 2008 (2008-08-27), pages 40-52,
XP025781147, ISSN: 0734-9750, DOI:
10.1016/J.BIOTECHADV.2008.08.005 [retrieved
on 2008-08-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to a method for the treatment of sludge with an enzyme composition comprising at least one cellulase and at least one mannanase. The method results in a decrease in oil in sediment, improved palm oil yields, and/or an increase in fermentable sugars in the aqueous phase.

**BACKGROUND**

Palm oil obtained from oil palm (*Elaeis guineensis*) is commercially important edible oil. Palm oil has been a prominent fat and oil resource for the food industry due to several advantageous properties, such as high productivity, low price, high thermal and oxidative stability, and plasticity at room temperature. In addition, compared with other vegetable oils, palm oil is a rich source of the antioxidant vitamin E.

In 2012, the world production of palm oil was 50 million ton/year, which in terms of quantity makes it the most important vegetable oil produced. It is estimated that 4-8% of palm oil is lost during processing. This loss can be split up as follows: 0.8-1% is lost in the palm mesocarp fibre, 1.5-2.7% is lost from the empty fruit bunch (EFB); and more than about 1% is lost in oil mill effluent (Ho et al., JAOCS, Vol. 69, No. 3 March 1992). The percentage calculation is based on fresh fruit bunches.

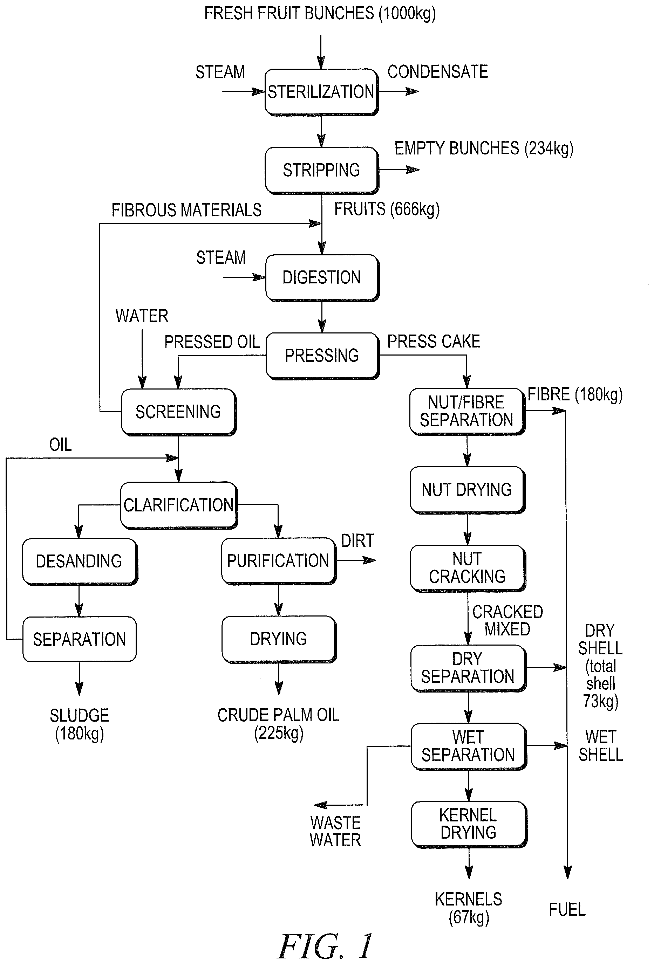

The processing of palm oil is complicated and extensive. Figure 1 shows flow diagram for palm oil processing. Production of crude palm oil is conducted by a series of unit operations starting with a sterilization of the fresh fruit bunch (FFB). After sterilization, the fruits are stripped from the bunch and digested. During the digestion, the palm fruit is disintegrated and oil released from the mesocarp. After digestion, the crude oil is separated from fiber by pressing the digested fruits.

The pressed palm oil contains crude palm oil, water and solid debris. Crude palm oil is separated under the influence of gravity from the pressed liquid by clarification in a clarification tank. Crude palm oil that is discharged from the presses is highly viscous. Thus separation of the oil from the solid and water is difficult without the addition of dilution water. Hot water is therefore added to the pressed liquid to dilute it prior to or during clarification. This typically occurs at temperatures of 80-90°C. The dilution provides a barrier causing the heavy solid to settle to the bottom of the clarification tank while the lighter oil droplets rise through the sludge phase to the top when heat is applied. In practice it has been found that dilution with water such that 38% to 40% of the mixture is crude oil was best for good separation in the clarification tank. Any remaining available oil post clarification is removed by centrifugation. The centrifuge sludge is a viscous liquid containing water, about 0.5-1.5% oil and 5-10% non-oil solids. For each ton of oil produced, 1-1.5 ton of centrifuge sludge is produced. The centrifuge sludge thus presents a substantial loss of oil. During these initial processing steps 90-92% of the theoretical palm oil amount is obtained, but there is a significant oil loss to the fiber (e.g. press cake) during processing as well as oil loss during downstream processing.

It is known to use enzymes in the processing of vegetable oils. Enzymes such as phospholipases or lipid acyltransferases have been used to increase the oil yield in enzymatic and/or water degumming of oil with a high content of phospholipids (see US Patent No. 6,001,640 and International Patent Application Publication Nos. WO2006/008508 and WO2009/081094). In these reactions the enzyme is added to water-degummed edible oils, crude edible oils or semi-crude edible oils comprising relatively high amounts of non-hydratable phosphorus ranging from about 50 ppm to about 3000 ppm. In the flow diagram shown herein in Figure 1 the type of oil which would have been produced in such processes is designated "crude palm oil". In any event degumming of palm oil is often not essential as the level of non-hydratable phosphorus can be naturally low in this product, especially in comparison to other vegetable oils. For example the phosphorus content of palm oil is about 15-30 ppm which is very low when compared to e.g. corn oil (250-800 ppm), cottonseed (400-1000 ppm), rapeseed (200-1400 ppm), soya (400-1200 ppm) or sunflower (200-500 ppm). Traditionally, palm oil is produced by pressing the oil out of the palm mesocarp without use of organic solvents.

**SUMMARY OF THE INVENTION**

In a first aspect, a method is provided for improving palm oil yields, said method comprises:

   i. admixing an enzyme composition comprising cellulase activity and mannanase activity with a sludge;
   ii. incubating the admixture for between 1 to 20 hours at a temperature of between 50 to 95°C; and
   iii. separating the oil from other components of the admixture.

In a further aspect, a use is provided for an enzyme composition comprising cellulase activity and mannanase activity in combination with a sludge in the manufacture of palm oil for improving palm oil yield, for improving separation of palm oil from the sludge, for producing an aqueous phase with improved fermentable sugars, and/or for improving the speed of oil separation.

In another aspect, provided herein is a method for producing a fermentation product comprising fermenting a feedstock comprising said aqueous phase obtainable by the method according to the first aspect and recovering said fermentation product.

## BRIEF DESCRIPTION OF THE DRAWINGS

Embodiments of the invention will now be described, by way of example only, with reference to accompanying drawings, in which:

Figure 1 shows a flow diagram for Palm Oil processing.
Figure 2 shows the effect of LAMINEX® BG2 on relative viscosity of centrifuge sludge.
Figure 3 shows the effect of LAMINEX® BG2 and LAMINEX® 750 on residual oil in sediment.
Figure 4 shows the effect of LAMINEX® BG2 and LAMINEX® 750 on insoluble dry matter in palm sludge dry sediment.
Figure 5 shows the effect of LAMINEX® BG2 - LAMINEX® 750 on water in wet sediment after incubation at 50 °C and centrifugation.

## DETAILED DESCRIPTION

A seminal finding of the present invention is that treatment of sludge with an enzyme composition comprising an enzyme having cellulase activity and an enzyme having mannanase activity can significantly reduce oil in the sediment/sludge (thus releasing the oil from the sediment/sludge) and/or increase oil yields.

Conventionally even when enzymes have been used in the treatment of sludge it has been shown that significant reductions in oil in the sludge can only be achieved with the use of detergents. Such detergent use is unacceptable for food grade palm oil production. The inventors of the present invention have shown that using an enzyme composition comprising cellulase and mannanase is able to reduce oil in sludge and/or increase oil yields without the use of detergents.

In addition, the present method also advantageously reduces the viscosity of the sludge allowing easier and/or faster and/or more efficient separation of crude palm oil, for example, from sludge.

Based on these findings a method is provided of improving palm oil yields, which method comprises:

i. admixing an enzyme composition comprising cellulase activity and mannanase activity with a sludge;
ii. incubating the admixture for between 1 to 20 hours at a temperature of between 50 °C to 95 °C; and
iii. separating the oil from other components of the admixture.

In a further aspect, a use of an enzyme composition comprising cellulase activity and mannanase activity as defined in any one of claims 1 or 5 to 8 in combination with a sludge in the manufacture of palm oil for improving palm oil yield, for improving separation of palm oil from the sludge, for producing an aqueous phase with improved fermentable sugars, or for improving the speed of oil separation is also provided.

In one embodiment, the incubation may be between about 4 hours and about 15 hours.

In one embodiment, the temperature may be between 50 °C to 90 °C, suitably between about 60 °C to about 65 °C.

In some embodiments, the admixture may be incubated at about 70 °C to 95 °C, more preferably at about 80 °C to 95 °C.

In one preferred embodiment, the admixture may be incubated at above about 55 °C, preferably about 60 °C.

The term "sludge", as used herein, means separator sludge (i.e., the heavy fraction of pressed palm fruit extract comprising oil, water and some organic material that has a tendency to settle out of pressed palm fruit extract); sterilizer effluent; or a mixture thereof. A mixture of at least separator sludge and sterilizer effluent may be referred to as palm oil mill effluent (POME). This may also be referred to herein as raw effluent. Separator sludge may be obtained by clarification, for example following separation as shown in Figure 1. By using the method and uses describe herein, it is possible to release oil from sediment of the waste streams, including from the separator sludge, the sterilizer effluent and/or POME in the palm oil mill.

The oil may be separated from the sediment and/or aqueous phase by any method known in the art. By way of example, the oil may be separated by gravity (e.g. by clarification). In one embodiment, the oil may be separated by centrifugation either instead of gravitation separation or in addition to separation by gravity.

In a preferred embodiment, the separation (e.g. centrifugation) results in a triple phase composition comprising an oil layer, an aqueous layer and a substantially solid sediment (or sludge) layer. The aqueous phase may be enriched in soluble fermentable sugars.

In one embodiment, the sludge phase produced by the present method has less dry solids compared with the sludge phase from a control (non-enzyme treated sample). As provided is the use of an aqueous phase obtained (preferably obtained) by the present method as a fermentation medium.

In another embodiment, a further method is provided for producing a fermentation product comprising fermenting a feedstock comprising said aqueous phase obtainable by the present method and recovering said fermentation product.

The feedstock used in accordance with the present methods may, in addition to the aqueous phase, further comprise empty palm fruit bunches or processed empty palm fruit bunches. As used herein, there term "processed empty palm fruit bunches" means empty palm fruit bunches which have undergone one or more processing steps, such as milling or chemical treatment (for example, acid treatment, alkaline treatment or a combination thereof).

A further surprising finding is that the resulting aqueous phase after separation from the oil, e.g. by centrifugation, is enriched in fermentable sugars. This aqueous phase can be used either alone or in combination with empty palm fruit bunches or processed empty palm fruit bunches as a substrate for fermentation, e.g. in the production of a fermentation product such as biofuel (such as ethanol or butanol). The empty palm fruit bunches may be pretreated prior to use for fermentation. For example, the empty palm fruit bunches may be milled and/or chemically treated by alkaline ammonia treatment and/or acid pretreatment.

The fermentation product in accordance with the present methods may be a compound selected from the group consisting of: an alcohol (e.g. a biofuel such as ethanol, butanol or a combination thereof), an antibiotic, an antimicrobial, a bioinsecticide, a solvent, a polyhydroxyalkanoate and an organic acid, e.g. gluconic acid, ascorbic acid intermediates, succinic acid, citric acid, acetic acid, lactic acid, butyric acid or propionic acid as well as other fermentation end-products, including but not limited to, 1,3-propanediol, acetone, and glycerol. In accordance with the present methods, the conversion of a substrate for fermentation to an end product involves the use of an enzymatic conversion by a known enzyme to the desired end-product using known enzymatic conversion methods. For example, in some embodiments, the conversion of glucose to a desired end product (e.g., propanediol, succinic acid, gluconic acid, lactic acid, amino acids, antimicrobials, ethanol, butanol, ascorbic acid intermediates and/or ascorbic acid) is accomplished by the addition of an amount of an enzyme known to convert glucose to the specified end product desired. For example enzymes useful for the conversion of a sugar to 1,3-propanediol may include, but are not limited to, enzymes produced by *E. coli* and other microorganisms. For example enzymes useful for the conversion of a sugar to lactic acid may include, but are not limited to, those produced by *Lactobacillus* and *Zymomonas.* Enzymes useful for the conversion of a sugar to ethanol may include, but are not limited to, alcohol dehydrogenase and pyruvate decarboxylase. Enzymes useful for the conversion of a sugar to ascorbic acid intermediates may include, but are not limited to, glucose dehydrogenase, gluconic acid dehydrogenase, 2,5-diketo-D-gluconate reductase, and various other enzymes. Enzymes useful for the conversion of a sugar to gluconic acid may include, but are not limited to, glucose oxidase and catalase.

The desired end-product can be any product that may be produced by the enzymatic conversion of the substrate to the end-product. For example, gluconate can be converted from glucose by contacting glucose with glucose dehydrogenase (GDH). In addition, gluconate itself can be converted to 2-KDG (2-keto-D-gluconate) by contacting gluconate with GDH. Furthermore, 2-KDG can be converted to 2,5-DKG by contacting 2-KDG with 2-KDGH. Gluconate can also be converted to 2-KDG by contacting gluconate with 2KR. Glucose can also be converted to 1,3-propanediol by contacting glucose with *E. coli.* In addition, glucose can be converted to succinic acid by contacting glucose with *E. coli.*

In some embodiments in which glucose is an intermediate, it is converted to ethanol by contacting glucose with an ethanologenic microorganism. In contacting the intermediate with an intermediate converting enzyme, it is contemplated that isolated and/purified enzymes are placed into contact with the intermediate. In yet another embodiment, the intermediate is contacted with bioconverting agents such as bacteria, fungi or other organism that takes in the intermediate and produces the desired end-product. In some embodiments, the organism is wild-type, while in other embodiments it is mutated.

Preferred examples of ethanologenic microorganisms include ethanologenic bacteria expressing alcohol dehydrogenase and pyruvate decarboxylase, such as can be obtained with or from *Zymomonas mobilis* (See for example, U.S. Pat. Nos. 5,028,539; 5,000,000; 5,424,202; 5,487,989; 5,482,846; 5,554,520; and 5,514,583, and copending applications having U.S. Ser. No. 08/363,868 filed on Dec. 27, 1994, U.S. Ser. No. 08/475,925 filed on Jun. 7, 1995, and U.S. Ser. No. 08/218,914 filed on Mar. 28, 1994).

The sustainable reuse of palm oil mill effluent (POME) is taught in Wu, et al., Biotechnology Advances 27 (2009) 40-52. The feedstock may be subjected to one or more processing steps selected from the group consisting of: milling, cooking and/or saccharification. A further surprising finding is that the enzyme incubation preferably takes place without or with only minimal agitation.

Preferably the enzyme composition comprising cellulase and mannanase for use in the present methods and uses is thermostable. In a further embodiment there is provided a use of at least one thermostable enzyme composition comprising cellulase and mannanase in combination with a sludge in the manufacture of palm oil for improving palm oil yield, for improving separation of palm oil from the sludge phase, for producing an aqueous phase with improved fermentable sugars, or for improving the speed of oil separation.

The method further comprises separating palm oil (crude palm oil) from sludge. In some embodiments, the crude palm oil may be separated from the sludge by clarifying, decanting or a combination thereof. In one aspect, the crude palm oil may be separated from the sludge by centrifugation.

The palm fruit extract for use in the methods and/or uses described herein may be a pressed palm fruit liquid.

In some embodiments, the admixture as defined in the present method may be incubated for about 2 hours.

The present method may comprise applying the enzyme composition to the sludge by: (a) spraying; (b) pouring the at least one enzyme into a vessel with the sludge; or (c) combinations thereof.

The enzyme or thermostable enzyme may be immobilized to a surface or cross-linked. By way of example, the enzyme or thermostable enzyme may be cross-linked using glutaraldehyde (Migneault et al., BioTechniques 37: 790:802 (2004).

In one embodiment, the separation of the crude oil from the sludge post-enzyme treatment may be carried out by clarification. "Clarification", as used herein, means using gravity to allow the oil to settle out of the sludge. During clarification the oil becomes "clear". Clarification may take place between approximately 90 and 95 °C. Typically one would leave the admixture for 1-3 hours to allow for the clarification process to occur. Large settling tanks (so-called vertical clarifiers) may be used in which the crude oil settles out of the sludge. The oil may be skimmed off the sludge while the sludge typically coming out of the bottom of a vertical clarifier is often called the "underflow").

Separation of the oil may be into 2-phases or 3-phases. When a 2-phase system is used (e.g. separation into an oil phase and a sludge phase) the sludge phase is enriched in soluble fermentable sugars. When a 3-phase system is used (e.g. separation into an oil phase, an aqueous phase, and a sludge phase) the aqueous phase is enriched in soluble fermentable sugars. The phase enriched in soluble fermentable sugars may be used as a fermentation media, for example, for the production of an alcohol (such as bioethanol) or other fermentation product as set forth herein.

Mechanisms may be employed to improve recovery of residual oil from the settled sludge (e.g. post clarification). For example, a centrifuge may be used to extract further oil from the sludge. Typically therefore the sludge may be sent to a centrifuge. Alternatively, a decanter may be used in combination with clarification. For example, 3-phase centrifuges or decanters may be employed. By way of example only a 3-phase decanter is available as "Westfalia SEPARATOR® topd 3-Phase Decanter" may be used to separate the sludge from the clarification process into 3-phases: an oil-phase, solids, and virtually oil-free waste water. Alternatively, nozzle-type separates such as the one from GEA Westfalia (Oelde, Germany) be used which separate the sludge from the clarification step into three phases: palm oil, solid concentrate and water.

The separation of the crude oil from the sludge may be carried out by decanting (e.g. without clarification). Decanters (3-phase) available as "Westfalia SEPARATOR® topd 3-Phase Decanter" can be used directly with enzyme treated pressed palm fruit extract without clarification. This may have the advantage of shorter processing time, smaller dimensions of the process lines. Also the risk of oxidation of the crude oil is less significant compared to the process using vertical clarifiers. Such a decanter separates the sludge into 3-phases: an oil-phase, a dry solids cake, and virtually oil-free waste water. Centrifugation may be used during or after the decanting process.

The method may further comprise purifiers downstream of the separation step (e.g. downstream of the clarification and/or decanting stage). The purifiers may remove even extremely small amounts of oil left in the effluent.

The method may further comprise a desanding step - which step removes sand to avoid erosion problems caused thereby. The sand may be removed by any method known to one skilled in the art. As the skilled person will appreciate, a multicyclone system may be used to separate the sand. Typically, the desanding step may occur prior to the centrifugation step.

The sludge may be prepared by sterilizing the fresh palm fruit bunches, stripping the fruit from the bunches, optionally digestion of the fruit, and pressing. The digestion may take place in a digester. During the digestion, the palm fruit is disintegrated and oil released from the fiber. After digestion, the crude oil is separated from the fiber by pressing the digested fruits. The fiber phase is the sludge phase and may be used as a starting point in the present methods.

In one embodiment, the enzyme may be admixed with the sludge in an enzyme reaction tank. Suitably, the admixture may be incubated at a temperature and/or time optimised for digestion of said sludge. It will be appreciated that the person skilled in the art will be capable of determining such a time empirically based on routine experimentation.

The term "admixed", as used herein, encompasses mixing, pouring, spraying, misting or other suitable means of contacting the enzyme(s) with the sludge.

Suitably, when the enzyme composition is admixed with or applied to the sludge this may occur behind a protective surface (e.g. a screen or a curtain). Advantageously, application behind a protective surface protects the individual(s) performing the application or admixing and minimises any negative effects to human health that could ensue by exposure (e.g. through inhalation) to the enzyme composition.

In one preferred embodiment, the mechanism for recovery of residual oil in the sludge is centrifugation.

Unless defined otherwise, all technical and scientific terms used herein have the same meaning as commonly understood by one of ordinary skill in the art to which this disclosure belongs. Singleton, et al., Dictionary of Microbiology and Molecular Biology, 20 ED., John Wiley and Sons, New York (1994), and Hale & Marham, The Harper Collins Dictionary of Biology, Harper Perennial, NY (1991) provide one of skill with a general dictionary of many of the terms used in this disclosure. Another reference providing the skilled person with general information is Palm Oil: Production, Processing, Characterization, and Uses; Volume 5 of AOCS Monograph Series on Oilseeds; edited by Oi-Ming Lai, Chin-Ping Tan and Casimir C. Akoh; and available from the publisher: Amer Oil Chemists Society, 2012. This disclosure is not limited by the exemplary methods and materials disclosed herein, and any methods and materials similar or equivalent to those described herein can be used in the practice or testing of embodiments of this disclosure. Numeric ranges are inclusive of the numbers defining the range. Unless otherwise indicated, any nucleic acid sequences are written left to right in 5' to 3' orientation; amino acid sequences are written left to right in amino to carboxy orientation, respectively.

The headings provided herein are not limitations of the various aspects or embodiments of this disclosure which can be had by reference to the specification as a whole. Accordingly, the terms defined immediately below are more fully defined by reference to the specification as a whole.

Amino acids are referred to herein using the name of the amino acid, the three letter abbreviation or the single letter abbreviation. As used herein, the term "amino acid sequence" is the sequence of amino acids as arrayed within a protein molecule. As such, the term may be used synonymously with the term "polypeptide" and/or the term "protein". In some instances, the term "amino acid sequence" is synonymous with the term "peptide". In some instances, the term "amino acid sequence" is synonymous with the term "enzyme".

The terms "protein" and "polypeptide" are used interchangeably herein. In the present disclosure and claims, the conventional one-letter and three-letter codes for amino acid residues may be used. The 3-letter code for amino acids as defined in conformity with the IUPAC IUB Joint Commission on Biochemical Nomenclature (JCBN). It is also understood that a polypeptide may be coded for by more than one nucleotide sequence due to the degeneracy of the genetic code.

Other definitions of terms may appear throughout the specification. Before the exemplary embodiments are described in more detail, it is to understand that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise. Thus, for example, reference to "an enzyme" includes a plurality of such candidate agents and equivalents thereof known to those skilled in the art, and so forth.

The publications discussed herein are provided solely for their disclosure prior to the filing date of the present application. Nothing herein is to be construed as an admission that such publications constitute prior art to the claims appended hereto.

## ENZYME COMPOSITION

Suitably the enzyme composition for use herein comprises cellulase activity and mannanase activity. The cellulase activity may be an endoglucanase (e.g. a β-glucanase) activity. In one embodiment, the enzyme composition in addition to comprising cellulase activity and mannanase activity further comprises one or more of the following activities: pectinase, hemicellulase, xylanase, glucuronidase, galactanase activity, and combinations thereof. The enzyme composition may be a crude or purified extract of a *Trichoderma reseei* fermentate.

In some embodiments, the enzyme composition may in addition to having a cellulase, e.g. an endoglucanase (e.g. a β-glucanase) activity and mannanase activity further comprise one or more of the activities selected from the group consisting of: pectinase, xylanase, glucuronidase, galactanase, and combinations thereof. Preferably the enzyme composition comprises endoglucanase (e.g. a β-glucanase) activity and mannanase activity.

Suitably the enzyme composition may comprise endoglucanase (e.g. a β-glucanase) activity, mannanase activity, and pectinase activity. The terms "cellulases" or "cellulolytic enzymes", as used herein, are understood as comprising endo-glucanase (EC 3.2.1.4) activity. In one embodiment, the enzyme composition used in accordance with the present method is an endoglucanase (EC 3.2.1.4), such as an endoglucanase that cuts the cellulose chains at random.

The cellulases may comprise a carbohydrate-binding module (CBM) which enhances the binding of the enzyme to a cellulose-containing fiber and increases the efficacy of the catalytic active part of the enzyme. A CBM is defined as contiguous amino acid sequence within a carbohydrate-active enzyme with a discrete fold having carbohydrate-binding activity. For further information of CBMs see the CAZy (Carbohydrate Active Enzymes Database; Lombard V, et al. (2014), Nucleic Acids Res 42:D490-D495) or Tomme et al. (1995) in Enzymatic Degradation of Insoluble Polysaccharides (Saddler and Penner, eds.), Cellulose- binding domains: classification and properties, pp. 142-163, American Chemical Society, Washington. In a preferred embodiment, the cellulases or cellulolytic enzymes may be a cellulolytic preparation as defined in U.S. Provisional Patent Application No. 60/941,251. In some embodiments the enzyme composition is a cellulase enzyme, such as one derived from *Trichoderma reesei.*

The cellulolytic activity may, in some embodiments, be derived from a fungal source, such as a strain of the genus *Trichoderma,* such as a strain of *Trichoderma reesei;* or a strain of the genus *Humicola,* such as a strain of *Humicola insolens.*

Endoglucanases (E.C. 3.2.1.4) catalyze endo-hydrolysis of 1,4-beta-D-glycosidic linkages in cellulose, cellulose derivatives (such as carboxy methyl cellulose and hydroxy ethyl cellulose), lichenin, beta-1,4 bonds in mixed beta-1,3 glucans such as cereal beta-D-glucans or xyloglucans and other plant material containing cellulosic parts. The authorized name is endo-1,4-beta-D-glucan 4-glucano hydrolase, but the abbreviated term endoglucanase is used in the present specification. Endoglucanase activity may be determined using carboxymethyl cellulose (CMC) hydrolysis according to the procedure of Ghose (1987), Pure and Appl. Chem. 59: 257-268.

In some embodiments, endoglucanases may be derived from a strain of the genus *Trichoderma,* such as a strain of *Trichoderma reesei;* a strain of the genus *Humicola,* such as a strain of *Humicola insolens;* or a strain of *Chrysosporium,* preferably a strain of *Chrysosporium lucknowense.* Suitably the cellulase may be a *Chrysosporium lucknowense* cellulase available from Dyadic International USA Inc. (Jupiter, FL, USA) for example, as taught in US Patent No. 7,892,812.

In some embodiments, the enzyme composition for use in the methods and/or uses may be the product of expression of one or more enzyme(s) in a suitable host cell (e.g. a fermentation product).

Suitably, the enzyme composition comprising any one or more of the activities indicated in the foregoing embodiment may be obtainable (e.g. obtained) from *Trichoderma,* preferably from *Trichoderma reesei.* In one embodiment, a suitable enzyme composition may be or may comprise LAMINEX® BG2 (available from DuPont Industrial Biosciences, Wilmington, DE, USA).

In one embodiment, the enzyme composition may be a fermentation of *Penicillum funiculosum* in combination with fermentation from *Trichoderma,* e.g. *Trichoderma reesei.* In another embodiment, the cellulase may be LAMINEX® Super 3G (available from DuPont Industrial Biosciences).

The enzyme composition comprising cellulase and mannanase for use in the present methods in preferably one which solubilises as much sediment as possible. Without wishing to be bound by theory when the enzyme composition described herein comprises cellulase activity together with mannanase activity, the enzyme composition preferably comprises a minimum level of mannanase activity which when added to the substrate gives a mannanase concentration of at least 200 MVR/kg substrate.

In some embodiments, the cellulase composition may comprise mannanase side activity. Where the mannanase activity is a side activity it must represent at least 200 MVR/kg substrate. Alternatively, a separate mannanase enzyme may be added to a cellulase composition to ensure at least 200 MVR/kg substrate mannanase activity is present in the substrate.

In one embodiment, the enzyme composition may comprise a xylanase. In another embodiment, the xylanase is of microbial origin, such as of fungal origin (e.g., *Trichoderma, Meripilus, Humicola, Aspergillus,* and *Fusarium*) or from a bacterium (e.g., *Bacillus*). In some embodiments, the xylanase is derived from a filamentous fungus, preferably derived from a strain of *Aspergillus,* such as *Aspergillus aculeatus;* or a strain of *Humicola,* preferably *Humicola lanuginosa.* The xylanase may preferably be an endo-1,4-beta-xylanase. Examples of commercial xylanases include GRINDAMYL™ POWERBAKE® 930 from Danisco A/S, Denmark or SHEARZYME™ and BIOFEED WHEAT™ from Novozymes A/S, Denmark.

In another embodiment, the enzyme composition may comprise a glucuronidase. The glucuronidase may be one or more selected from: a 1,2-alpha-glucuronidase (E.C. 3.2.1.131), an alpha-glucuronidase (E.C. 3.2.1.139), a beta-glucuronidase (E.C. 3.2.1.31), a glucuronosyl-disulfoglucosamine glucuronidase (E.C. 3.2.1.56) or a combination thereof.

As used herein, the term "beta-glucuronidase" is synonymous with "beta-glucuronide glucuronohydrolase". In another embodiment, the glucuronidase may be a 1,2-alpha-glucuronidase (E.C. 3.2.1.131). In one embodiment, the glucuronidase may be an alpha-glucuronidase (E.C. 3.2.1.139). In another embodiment, the glucuronidase may be a beta-glucuronidase (E.C. 3.2.1.31). In a different embodiment, the glucuronidase may be a glucuronosyldisulfoglucosamine (E.C. 3.2.1.56).

In one embodiment, the enzyme composition may comprise a galactanase. The galactanase may be selected from an exo-galactanase (E.C. 3.2.1.23) or an endo-galactanase (E.C. 3.2.1.89), such as an arabinogalactan endo-1,4-beta-galactosidase or a galactan endo-beta-1,3-galactanase (E.C. 3.2.1.181). Arabinogalactan endo-1,4-beta-galactosidase catalyzes the endohydrolysis of 1,4-D-galactosidic linkages in arabinogalactans.

The term "xylanase", as used herein, refers to an enzyme that is able to hydrolyze the beta-1,4 glycosyl bond in non-terminal beta-D- xylopyranosyl-1,4-beta-D-xylopyranosyl units of xylan or arabinoxylan. Other names may include 1,4-beta-D-xylan xylanohydrolase, 1,4-beta-xylan xylanohydrolase, beta-1,4- xylan may xylanohydrolase, (1-4)-beta-xylan 4-xylanohydrolase, endo-1,4-beta-xylanase, endo-(1-4)-beta-xylanase, endo-beta-1,4-xylanase, endo-1,4-beta-D-xylanase, endo-1,4-xylanase, xylanase, beta-1,4-xylanase, beta-xylanase, beta-D-xylanase. Xylanases can be derived from a variety of organisms, including plant, fungal (e.g. species of *Aspergillus, Penicillium, Disporotrichum, Neurospora, Fusarium, Humicola, Trichoderma, Geosmithia,* and *Talaromyces*) or bacterial species (e.g. species of *Bacillus, Aeromonas, Streptomyces, Nocardiopsis,* and *Thermomyces*) (see, for example, International Patent Application Publication Nos. WO92/17573, WO92/01793, WO91/19782, and WO94/21785).

In one aspect, the xylanase is an enzyme classified as EC 3.2.1.8. The official name is endo-1,4-beta-xylanase. The systematic name is 1,4-beta-D-xylan xylanohydrolase. Other names may be used, such as endo-(1-4)-beta-xylanase; (1-4)-beta-xylan 4-xylanohydrolase; endo-1,4-xylanase; xylanase; beta-1,4-xylanase; endo-1,4-xylanase; endo-beta-1,4-xylanase; endo-1,4-beta-D-xylanase; 1,4-beta-xylan xylanohydrolase; beta-xylanase; beta-1,4-xylan xylanohydrolase; endo-1,4-beta-xylanase; beta-D-xylanase. The reaction catalyzed is the endohydrolysis of 1,4-beta-D-xylosidic linkages in xylans.

The mannanase may be any commercially available mannanase. The mannanase may be an endo-1,4-$\beta$-D-mannanase (classified as E.C. 3.2.1.78) or a $\beta$-mannosidase (classified as E.C. 3.2.1.25). In one preferred embodiment, the mannanase is an endomannanase, for example, an endo-1,4-$\beta$-D-mannanase. The classification for an endo-1,4-$\beta$-D-mannanase ($\beta$-mannanase) is E.C. 3.2.1.78. In one embodiment, the enzyme composition comprises a $\beta$-mannanase (E.C. 3.2.1.78) from *Bacillus.* In one embodiment, the enzyme composition comprises a $\beta$-mannanase (E.C. 3.2.1.78) from *Bacillus lentus* or *Bacillus subtilis* or *Bacillus licheniformis.* In one embodiment, the enzyme composition may comprise MANNASTAR® 375 (Available commercially from DuPont Industrial Biosciences). In one embodiment, the enzyme composition comprises a $\beta$-mannanase (E.C. 3.2.1.78) from *Bacillus lentus,* e.g. such as the commercial HEMICELL® and HEMICELL®-HT product from ChemGen Corp. (Gaithersburg, MD, USA; Elanco).

In one embodiment, the enzyme composition comprises HEMICELL®-W (a commercial product sold by ChemGen Corp. comprising $\beta$-Mannanase (EC 3.2.1.78) from *Bacillus lentus* and a xylanase (EC 3.2.1.8) from *Trichoderma longibrachiatum).* In one embodiment, the enzyme composition comprises a $\beta$-mannanase (E.C. 3.2.1.78) from *Bacillus licheniformis,* such as the $\beta$-Mannanase (EC 3.2.1.78) from *Bacillus licheniformis* sold in CTCZYME® - a product sold by CTC BIO Inc. (Gangwan-do, Korea). In one embodiment, the enzyme composition may comprise ZYMANASE® (a commercial product sold by ChemGen Corp. comprising a $\beta$-Mannanase (EC 3.2.1.78) and a $\beta$-glucanase. In one embodiment, the enzyme composition may comprise CTCZYME® - a product sold by CTC BIO Inc., and comprising a $\beta$-Mannanase (EC 3.2.1.78) from *Bacillus licheniformis* (*B. licheniformis* gene expressed in *B. subtilis*). In one embodiment, the enzyme composition may comprise a mannanase taught in US Patent No. 7,846,705.

In another embodiment, the enzyme composition is suitably a thermostable enzyme composition. In one embodiment, one or more of the enzymes described herein are thermostable ("thermostable enzymes"). In one embodiment, the enzyme may be cross-linked with glutaraldehyde in order to improve the enzymes thermostability. For example, see the teachings of Schmid et al., Adv. Biochem Eng. 12, p 41,118 (1979) and European Patent No. 0575323B1. In one embodiment, the enzyme composition or thermostable enzyme is not a genetically modified enzyme.

As used herein, the term "thermostability" is the ability of an enzyme to resist irreversible inactivation (usually by denaturation) at a relatively high temperature. This means that the enzyme retains a specified amount of enzymatic activity after exposure to an identified temperature over a given period of time.

There are many ways of measuring thermostability. By way of example, enzyme samples maybe incubated without substrate for a defined period of time (e.g. 10 min or 1 to 30 min) at an elevated temperature compared to the temperature at which the enzyme is stable for a longer time (days). Following the incubation at elevated temperature the enzyme sample is assayed for residual activity at the permissive temperature of e.g. 30 °C (alternatively 25-50 °C or even up to 70 °C). Residual activity is calculated as relative to a sample of the enzyme that has not been incubated at the elevated temperature.

Thermostability can also be measured as enzyme inactivation as function of temperature. Here enzyme samples are incubated without substrate for a defined period of time (e.g. 10 min or 1 to 30 min) at various temperatures and following incubation assayed for residual activity at the permissive temperature of e.g. 30°C (alternatively 25-70°C or even higher). Residual activity at each temperature is calculated as relative to a sample of the enzyme that has not been incubated at the elevated temperature. The resulting thermal denaturation profile (temperature versus residual activity) can be used to calculate the temperature at which 50% residual activity is obtained. This value is defined as the Tm value. Even further, thermostability can be measured as enzyme inactivation as function of time. Here enzyme samples are incubated without substrate at a defined elevated temperature (e.g. 76°C) for various time periods (e.g. between 10 sec and 30 min) and following incubation assayed for residual activity at the permissive temperature of e.g. 30°C (alternatively 25-70°C or even higher). Residual activity at each temperature is calculated as relative to an enzyme sample that has not been incubated at the elevated temperature. The resulting inactivation profile (time versus residual activity) can be used to calculate the time at which 50 % residual activity is obtained. This is usually given as T1/2. These are examples of how to measure thermostability. Thermostability can also be measured by other methods. Preferably thermostability is assessed by use of the "Assay for measurement of thermostability" as taught herein.

In contradistinction to thermostability, thermoactivity is enzyme activity as a function of temperature. To determine thermoactivity enzyme samples may be incubated (assayed) for the period of time defined by the assay at various temperatures in the presence of substrate. Enzyme activity is obtained during or immediately after incubation as defined by the assay (e.g. reading an OD-value which reflects the amount of formed reaction product). The temperature at which the highest activity is obtained is the temperature optimum of the enzyme at the given assay conditions. The activity obtained at each temperature can be calculated relative to the activity obtained at optimum temperature. This will provide a temperature profile for the enzyme at the given assay conditions. The thermostability of an enzyme may be determined using the "Assay for measurement of thermostability" (see below).

**"Assay for measurement of thermostability"**

The thermal denaturation profiles of the enzyme is measured by diluting and pre-incubating the enzyme samples in 25 mM acetate buffer, pH 4.5 for 10 min at varying temperatures (60, 65, 70, 75, 80, 85 and 90 °C, respectively) and subsequently measuring the residual activity of the enzyme when tested in the "Beta-Glucanase Activity Assay" described herein.

In the assay, activity measured without pre-incubation is set to 100 % and the residual activity of an enzyme at each temperature is calculated as relative to this. Tm value is calculated from the thermal denaturation profiles as the temperature at which 50 % residual activity is obtained.

In one embodiment, an enzyme is considered to be thermostable if it has a Tm value of more than 70 °C, wherein the Tm value is the temperature at which 50% residual activity is obtained after 10 min incubation. This Tm value may be measured in accordance with the assay for measurement of thermostability as taught herein.

In one embodiment, an enzyme is considered to be thermostable if it has a Tm value of more than 75 °C, wherein the Tm value is the temperature at which 50% residual activity is obtained after 10 min incubation. This Tm value may be measured in accordance with the assay for measurement of thermostability as taught herein.

In one embodiment, an enzyme is considered to be thermostable if it has a Tm value of more than 80 °C, wherein the Tm value is the temperature at which 50% residual activity is obtained after 10 min incubation. This Tm value may be measured in accordance with the assay for measurement of thermostability as taught herein.

In certain embodiments, the thermostable enzymes described herein possessing residual activity post heat treatment may be used in subsequent processes (e.g., for use in a biorefinery application).

In one embodiment, the enzyme(s) used in the present methods is not CELLUCLAST® (by Novozymes, A/S).

In one embodiment, the enzyme does not comprise pectinase activity.

In one embodiment, the enzyme or thermostable enzyme for use in the methods and/or uses described herein may be immobilized.

As used herein, the term "immobilized" means that the enzyme or enzyme is fixed in position and its movement impeded but the activity of the enzyme or thermostable enzyme is not substantially altered by such immobilization. Suitably, an immobilized enzyme or thermostable enzyme may retain at least 50% of its activity when compared to a non-immobilized enzyme or thermostable enzyme. Suitably it may retain at least about 50%, 60%, 70%, 80%, 90% or 95% of its activity when compared to a non-immobilized enzyme or thermostable enzyme. An "immobilized" enzyme or thermostable enzyme may be fixed to a surface. This may be achieved by any known means within the art which do not substantially alter the activity of the enzyme or thermostable enzyme. Suitably, the enzyme or thermostable enzyme may be immobilized by cross-linking (e.g. cross-linking to a surface).

DESCRIPTION OF PREFERRED EMBODIMENTS

In a first embodiment, a method of improving palm oil yields is provided, which method comprises:

　　i. admixing an enzyme composition comprising cellulase activity and mannanase activity with a sludge;

　　ii. incubating the admixture for between 1 to 20 hours at a temperature of between 50 to 95°C; and

　　iii. separating the oil from other components of the admixture.

In a second embodiment, a use of an enzyme composition is provided comprising cellulase activity and mannanase activity in combination with a sludge in the manufacture of palm oil for improving palm oil yield, for improving separation of palm oil from the sludge, for producing an aqueous phase with improved fermentable sugars, or for improving the speed of oil separation.

In a third embodiment, a method is provided according the first embodiment or use according to the second embodiment wherein the sludge is one or more selected from the group consisting of: separator sludge; sterilizer effluent; palm oil mill effluent.

In a fourth embodiment, a method is provided according to the first embodiment or third embodiment or use according to the second or third embodiments wherein the oil is separated by centrifugation.

In a fifth embodiment, a method or use according to the fourth embodiment is provided wherein the centrifugation results in a triple phase composition comprising an oil layer, an aqueous layer and a substantially solid sediment (or sludge) layer.

In a sixth embodiment, a method or use according to the fifth embodiment is provided wherein the aqueous phase is enriched in soluble fermentable sugars. In a seventh embodiment, a method or use according to any one of the preceding preferred embodiments is provided wherein said enzyme composition further comprises pectinase activity.

In an eight embodiment, a method or use according to any one of the preceding preferred embodiments is provided wherein said enzyme composition comprises low or no protease activity.

In a ninth embodiment, a method or use according to any one of the preceding preferred embodiments is provided wherein the enzyme composition is a crude or purified extract of a *Trichoderma reesei* fermentate.

In a tenth embodiment, a method or use according to any one of the preceding preferred embodiments is provided wherein the cellulase in one which reduces the amount of dry sediment (sludge dry matter) by at least 20% when 25000 CMC-DNS/kg substrate is added to sludge and incubated for 1 hr at 50°C.

In an eleventh embodiment, a method or use according to any one preceding preferred embodiments is provided wherein when the enzyme composition comprises mannanase, the enzyme composition comprises a minimum level of mannanase activity which when added to the substrate give a mannanase concentration of at least about 200 MVR/kg substrate.

In a twelth embodiment, a method for producing a fermentation product is provided comprising fermenting a feedstock comprising said aqueous phase obtainable by the method according to any one of the preceding preferred embodiments and recovering said fermentation product.

In a thirteenth embodiment, a method is provided according to the twelth embodiment wherein said feedstock further comprises empty palm fruit bunches or processed empty palm fruit bunches.

In a fourteenth embodiment, a method is provided according to the twelth or thirteenth embodiments, wherein said fermentation product is a compound selected from the group consisting of: an alcohol, an organic acid, an antibiotic, an antimicrobial, bioinsecticide, a solvent, and a polyhydroxyalkanoate.

In a fifteenth embodiment, a method is provided according to any one of the twelth, thirteenth or fourteenth embodiments wherein the feedstock is subjected to one or more processing steps selected from the group consisting of: milling, cooking and/or saccharification.

In a sixteenth embodiment, a method is provided according the fourteenth or fifteenth embodiments wherein the alcohol is a biofuel (e.g. an ethanol, a butanol or a combination thereof).

## ENZYME ACTIVITY ASSAYS

## CELLULASE ACTIVITY ASSAY: BY THE CMC-DNS PROCEDURE:

The assay of cellulase activity (e.g. endo-1,4-$\beta$-glucanase activity) is based on the enzymatic hydrolysis of the 1,4-$\beta$-D-glucosidic bonds in carboxymethylcellulose (CM-Cellulose 4M, Megazyme Ltd) a $\beta$-1,4-glucan. The enzyme is diluted in ddH$_2$0 and 0,25 mL enzyme solution added to 1,75 mL substrate (1,5% CMC in 0.2M sodium acetate buffer, pH 5.0) at 50 °C. After 10 min of incubation a 2 mL 1% 3,5-dinitrosalicylic acid (DNS) solution is added and the sample is placed in boiling water bath for 5 min. The products of the reaction ($\beta$-1,4 glucan oligosaccharides) are determined colorimetrically at 540 nm by measuring the resulting increase in reducing groups reacting with the DNS. Enzyme activity is calculated from the relationship between the concentration of reducing groups, as glucose equivalents, and absorbance using a glucose standard in the range 0.125-0.5 mg/mL. One unit of cellulase activity is defined as the amount of enzyme which produces 1 $\mu$mole glucose equivalents per minute under assay conditions.

In one embodiment, a cellulase is a cellulase which reduces the amount of dry sediment (dry matter) by at least 20% when 25000 CMC-DNS/kg substrate is added to sludge and incubated for 1 hr at 50 °C and the sludge dry matter is analysed by the following procedure: After incubation the sample was placed in at water bath at 95°C for 10 minutes to stop the enzyme reaction, and transferred to a tarred 50 mL-centrifuge tube.

The sample was centrifuged at 4180 rcf (relative centrifugal force) and 60 °C for 10 minutes. The upper oil layer was removed, and remaining water phase was discharged. 30 mL water at 50°C was added to each tube. The sample was centrifuged at 4180 rcf and 60 °C for 10 minutes. The water phase was removed and the side of the tube was wiped with a tissue to remove residual oil on the inside of the tube. The wet sediment was scaled, frozen and freeze dried. Weight of the dry sediment was determined after freeze drying.

**PECTINASE AND MANNANASE ACTIVITY (PVR U/G AND MVR U/G) ASSAYS MEASURED BY VISCOSITY REDUCTION PROCEDURE:**

An enzyme sample (25, 50, 75 and 100 μL) diluted in ddH$_2$O is added to hydrocolloid solution (0,5% Grindsted GUAR® 250 pH 6.7 or 1.4% Pectin SY200 pH 4 in Citric acid-Sodium phosphate buffer) and incubated 19 hours at 40 °C. The hydrocolloid is cleaved by the enzyme to oligosaccharides, thereby creating a drop in viscosity of the solution. Following this, samples are tempered for 20 minutes on ice before measuring viscosity at 0 °C using a Viscoman pipette (Gilson, Inc., USA). The viscosity reduction is calculated as the viscosity of a sample with addition of enzyme relative to viscosity of sample without enzyme. The viscosity reduction is plotted against LN (μL dosage in substrate) and should be linear within relative viscosity of 0.1 to 0.85. Activity of the sample in U/g is calculated using the regression line. Pectinase viscosity reduction (PVR) and Mannanase viscosity reduction (MVR) units are defined as the amount of enzyme that will degrade the hydrocolloid substrate solution to a 50% (0.5) viscosity reduction in 19 hours of incubation at 40 °C.

Preferably the enzyme composition comprises a minimum level of mannanase activity which when added to the substrate will give a mannanase concentration of at least about 200 MVR/kg substrate.

Where the enzyme composition comprises pectinase, preferably the enzyme composition comprises a minimum level of pectinase activity which when added to the substrate will give a mannanase concentration of at least about 9 PVR/kg substrate

In one embodiment, the enzyme composition comprises low or no protease (activity). In other words, preferably there is no or only very low levels of protease activity in the reaction admixture during incubation.

**PROTEASE ACTIVITY (PU) ASSAY - WITH SULFANILAMIDE-AZOCASEIN**

The azocasein assay is based on hydrolyses of the azocasein which releases the azo dyed peptide in the supernatant where it is detected at 450 nm. These peptides cannot precipitate by the addition of acid, as against non hydrolysed azocasein, which precipitates. Substrate: 0,25% Azocasein(Sigma A2765) dissolved in 50 mM sodium-citrate buffer pH 6. Procedure: 100 μL enzyme solution is incubated with 250 μL substrate for 30 minutes at 40 °C. Trichloracetic acid (50 μL 2M) is added, and the sample is centrifuged at 10000 rcf for 5 minutes. Supernatant (195 μL) is transferred to a microtiter filterplate (0,2 μm PVDF Hydrophilic membrane) and 85 μL 1M NaOH is added. The sample is filtered into another microtiter plate by centrifugation at 2400 rcf for 2 minutes. OD$_{450}$ of the filtrated sample is read. The activity of the enzyme sample is measured based on a calibration curve obtained by analyzing different dilutions of a commercial Protease, Protex 14L (Standardized to 150 PU/mL) and construction of a calibration curve of OD$_{450}$ as a function of PU/g. In one embodiment preferably the enzyme composition has not more than about 0.1 PU/mL. In one embodiment preferably the enzyme composition has not more than about 0.04 PU/mL.

**XYLANASE ACTIVITY ASSAY**

To 1.0 mL aliquots of assay buffer (0.1 M NaAc, pH 5.0) is added 25 μL, 50 μL, 75 μL and 100 μL of enzyme solution and the mixtures are equilibrated at 40 °C for 5 minutes. One XylaZyme tablet (Megazyme cat no. T-XYZ100; Megazyme, Wicklow, Ireland) (e.g. containing AZCL-arabinoxylan (wheat)) is added to each test tube and the test tubes must not be stirred. After exactly 10 minutes incubation 10 mL stop solution (1% (w/v) Tris(hydroxymethyl)-aminomethane) is added. The test tubes are stirred and the solutions are filtered through Whatman No. 1 filter paper.

The absorbance at 590 nm of standard and test samples is measured against a blank sample without enzyme. The concentrations of standard and sample enzymes are adjusted so that the optical densities (OD) at 590 nm are within the range 0.2-1.1.

The Standard enzyme is xylanase from *Aspergillus niger,* Megazyme catalog no. E-XYAN4.

The OD$_{590}$'s for standard and test enzymes are plotted against the volumes of enzyme solution added. The best curve fit is found using linear regression. The volumes of standard (V$_{st}$) and test enzymes (V$_t$) corresponding to an OD$_{590}$ of 0.7 are calculated.

$$XU/g = \frac{ACT_{st} * V_{st} * D_t * A_{st}}{V_t * D_{st} * A_t}$$

where

ACT$_{st}$     = activity of standard enzyme preparation, XU/g
D$_t$         = dilution of test sample, ml

$D_{st}$ = dilution of standard enzyme, mL
$A_{st}$ = amount of standard enzyme, g
$A_t$ = amount of test sample in g
$V_{st}$ = volume of standard enzyme read on x-axis, $\mu$L
$V_t$ = volume of test sample read on x-axis, $\mu$L

An enzyme is a xylanase if in the Xylanase Activity Assay herein it has at least 100 Units/mL.

## DOSAGE

The one or more enzyme(s) for use in the present methods may be dosed at predetermined amounts when treating the sludge. In one embodiment, the one or more enzyme(s) may be dosed at 0.5 to 500 mg/kg sludge. In another embodiment, the one or more enzyme(s) may be dosed at 1 to 200 mg/kg sludge. In still another embodiment, the one or more enzyme(s) may be dosed at 1 to 100 mg/kg sludge. In still other embodiments, the one or more enzyme(s) may be dosed at 1 to 50 mg/kg sludge. In a yet further embodiment, the one or more enzyme(s) may be dosed at 1 to 10 mg/kg sludge.

## HOST CELL

The host organism can be a prokaryotic or a eukaryotic organism. The at least one enzyme may be obtainable (e.g. obtained) from any source. The at least one enzyme may be a recombinant enzyme, for example an enzyme that is heterologous to the cell in which it is expressed. In other embodiments the enzyme may be native to the cell in which it is expressed. In one embodiment the one or more enzyme(s) is not obtainable (e.g. obtained) from a *Trichoderma* (e.g. *Trichoderma reesei*) host cell.

Alternative host cells may be fungi, yeasts or plants for example. The host cell may be any *Bacillus* cell other than *B.subtilis.* Preferably, said *Bacillus* host cell being from one of the following species: *Bacillus licheniformis; B. alkalophilus; B. amyloliquefaciens; B. circulans; B. clausii; B. coagulans; B. firmus; B. lautus; B. lentus; B. megaterium; B. pumilus* or *B. stearothermophilus.* Suitably the host cell may a fungal host cell. Suitably the host cell may be any a *Trichoderma, Meripilus, Humicola, Aspergillus, Fusarium* or *Chrysosporium* host cell. Suitably, the host cell may be a protease deficient or protease minus strain and/or an $\alpha$-amylase deficient or $\alpha$-amylase minus strain.

The term "heterologous", as used herein, means a sequence derived from a separate genetic source or species. A heterologous sequence is a non-host sequence, a modified sequence, a sequence from a different host cell strain, or a homologous sequence from a different chromosomal location of the host cell. As used herein, a "homologous" sequence is a sequence that is found in the same genetic source or species i.e. it is naturally occurring in the relevant species of host cell.

## REGULATORY SEQUENCES

In some applications, an enzyme for use in the methods and/or uses described herein may be obtained by operably linking a nucleotide sequence encoding same to a regulatory sequence which is capable of providing for the expression of the nucleotide sequence, such as by the chosen host cell (such as a *B. licheniformis* cell).

As used herein, the term "operably linked" refers to a juxtaposition wherein the components described are in a relationship permitting them to function in their intended manner. A regulatory sequence "operably linked" to a coding sequence is ligated in such a way that expression of the coding sequence is achieved under conditions compatible with the control sequences.

As used herein, the term "regulatory sequences" includes promoters and enhancers and other expression regulation signals.

As used herein, the term "promoter" is used in the normal sense of the art, e.g. an RNA polymerase binding site.

Enhanced expression of the nucleotide sequence encoding the enzyme having the specific properties as defined herein may also be achieved by the selection of regulatory regions, e.g. promoter, secretion leader and terminator regions that are not regulatory regions for the nucleotide sequence encoding the enzyme in nature. Suitably, the nucleotide sequence may be operably linked to at least a promoter.

## PROMOTER

The promoter sequence to be used in accordance with the present methods may be heterologous or homologous to the sequence encoding any one of the enzymes for use in the present methods or uses described herein. The promoter sequence may be any promoter sequence capable of directing expression of an enzyme in the host cell of choice.

Suitably, the promoter sequence may be homologous to a *Bacillus* species, for example *B. licheniformis.* Preferably, the promoter sequence is homologous to the host cell of choice.

In another embodiment, the promoter may be homologous to a *Geosmithia* species, for example *Geosmithia emersonii.*

Suitably, the promoter sequence may be homologous to the host cell. "Homologous to the host cell" means originating within the host organism; i.e. a promoter sequence which is found naturally in the host organism.

Suitably, the promoter sequence may be selected from the group consisting of a nucleotide sequence encoding: an α-amylase promoter, a protease promoter, a subtilisin promoter, a glutamic acid-specific protease promoter and a levansucrase promoter.

Suitably the promoter sequence may be a nucleotide sequence encoding: the LAT (e.g. the alpha-amylase promoter from *B. licheniformis,* also known as AmyL), AprL (e.g. subtilisin Carlsberg promoter), EndoGluC (e.g. the glutamic-acid specific promoter from *B. licheniformis*), AmyQ (e.g. the alpha amylase promoter from *B. amyloliquefaciens* alpha-amylase promoter) and SacB (e.g. the *B. subtilis* levansucrase promoter).

Other examples of promoters suitable for directing the transcription of a nucleic acid sequence may include: the promoter of the *Bacillus lentus* alkaline protease gene (aprH), ; the promoter of the *Bacillus subtilis* alpha-amylase gene (amyE); the promoter of the *Bacillus stearothermophilus* maltogenic amylase gene (amyM); the promoter of the *Bacillus licheniformis* penicillinase gene (penP); the promoters of the *Bacillus subtilis* xylA and xylB genes; and/or the promoter of the *Bacillus thuringiensis* subsp. *tenebrionis* CryIIIA gene.

## SIGNAL PEPTIDE

The enzyme produced by a host cell by expression of the nucleotide sequence encoding the enzyme may be secreted or may be contained intracellularly depending on the sequence and/or the vector used. A signal sequence may be used to direct secretion of the coding sequences through a particular cell membrane. The signal sequences may be natural or foreign to the coding sequence of the enzymes. For instance, the signal peptide coding sequence may be obtained from an amylase or protease gene from a *Bacillus* species, preferably from *Bacillus licheniformis.*

Suitable signal peptide coding sequences may be obtained from one or more of the following genes: maltogenic α-amylase gene, subtilisin gene, beta-lactamase gene, neutral protease gene, and/or prsA gene. In some embodiments, a nucleotide sequence encoding a signal peptide may be operably linked to a nucleotide sequence encoding any one of the enzymes disclosed herein. The enzyme for use in accordance with the present methods may be expressed in a host cell as defined herein as a fusion protein.

## EXPRESSION VECTOR

The term "expression vector" means a construct capable of *in vivo* or *in vitro* expression. Preferably, the expression vector is incorporated in the genome of the organism, such as a *B. licheniformis* host. The term "incorporated" preferably covers stable incorporation into the genome.

The nucleotide sequence encoding an enzyme as defined herein may be present in a vector, in which the nucleotide sequence is operably linked to regulatory sequences such that the regulatory sequences are capable of providing the expression of the nucleotide sequence by a suitable host organism (such as *B. licheniformis*), i.e. the vector is an expression vector. The vectors may be transformed into a suitable host cell as described above to provide for expression of a polypeptide having cellulase activity as defined herein. The choice of vector, e.g. plasmid, cosmid, virus or phage vector, genomic insert, will often depend on the host cell into which it is to be introduced. The present methods may cover other forms of expression vectors which serve equivalent functions and which are, or become, known in the art.

Once transformed into the host cell of choice, the vector may replicate and function independently of the host cell's genome, or may integrate into the genome itself. The vectors may contain one or more selectable marker genes - such as a gene which confers antibiotic resistance e.g. ampicillin, kanamycin, chloramphenicol or tetracycline resistance. Alternatively, the selection may be accomplished by co-transformation (as described in International Patent Application Publication No. WO91/17243). Vectors may be used *in vitro,* for example for the production of RNA or used to transfect or transform a host cell. The vector may further comprise a nucleotide sequence enabling the vector to replicate in the host cell in question. Examples of such sequences are the origins of replication of plasmids pUC19, pACYC177, pUB110, pE194, pAMB1 and pIJ702.

## ISOLATED

In one aspect, the enzyme is a recovered/isolated enzyme. Thus, one or more of the enzyme(s) produced may be in an isolated form.

## PURIFIED

In one aspect, the enzyme(s) may be in a purified form. As used herein, the term "purified" means that the sequence is in a relatively pure state - e.g. at least about 51% pure, or at least about 75%, or at least about 80%, or at least about 90% pure, or at least about 95% pure or at least about 98% pure.

## ADVANTAGES

The methods and/or uses described herein have many advantages over methods and/or uses taught in the prior art.

The enzyme composition is advantageously able to decrease oil in sediment or sludge. In this way, more oil can be recovered from the sludge phase and thus improvements in overall oil yields can be achieved e.g. without the use of detergents or organic solvents.

Additionally or alternatively, the enzyme composition(s) taught in the present application is/are advantageously able to decrease viscosity of the sludge and/or increase fermentable sugars in the aqueous phase.

The methods and uses described herein make it possible to isolate a heavy sediment phase. The isolated heavy phase has a low water binding capacity making it easy to dry. This has advantages with regard to downstream processing of this waste-stream (e.g., it can be burnt to generate steam for the plant).

In a further aspect, the present methods advantageously reduce the biochemical oxygen demand (BOD) in waste.

The present methods and/or uses also result in increased palm oil yields during palm oil processing. In particular, a lot of the oil which is held in the sediment can be advantageously released by use of the present methods.

One advantage of the present methods is that the water binding of the sediment (sludge) may be reduced. This has advantages for when the sludge is used as a raw material as less water needs to be removed prior to its use.

A further advantage is that the aqueous phase of the centrifuged enzyme treated sludge is enriched in fermentable sugars in comparison to waste water from palm oil mills not utilizing the enzymatic treatment described herein. Thus, this renders the aqueous phase suitable as a fermentation medium (e.g. together with empty fruit bunches), e.g. for the production of bioethanol. Thus again increasing the economy of the process. In some embodiments the water in the aqueous phase may be recycled back into the process before the clarification tank.

The present method further increases the solubilization of insoluble dry matter and of carbohydrates. Thus, one advantage is the reduced the amount of POME in the processing of palm fruit.

In another aspect, the present methods use one or more thermostable enzymes in palm fruit processing.

The thermostable enzyme(s) is able to function at the high temperatures used in palm fruit processing. This allows the enzymatic solution to be directly applied in current processes with minimal investment in additional or new equipment (for example, a low temperature incubation tank) or disruption of existing technologies.

The present method and/or uses may have one or more further advantages over prior art processes including:

- Enhanced oil yield from the sludge;
- Reduced final-sludge formation;
- Improved separation of the crude palm oil from the sludge;
- Provision of a more environmentally friendly process (e.g. due to increased yields fewer hectares of land are required for plantations);
- No need to use stringent chemical such as detergents; and/or
- Reduced loss of oil to the fibre extract during processing.

The use of the enzymes in accordance with the present method has surprisingly been found to be a very effective and efficient, as well as environmentally friendly, way of significantly improving crude palm oil yields from palm oil processing.

## EXAMPLES

The present invention is further defined in the following Examples. It should be understood that these Examples, while indicating preferred embodiments of the invention, are given by way of illustration only and should not be considered to limit the scope of the claims. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "sec" or "s" means second(s), "ms" mean milliseconds, "min" means minute(s), "h" or "hr" or "hrs" means hour(s), "µL" means microliter(s), "mL" means milliliter(s), "L" means liter(s); "mL/min" is milliliters per minute; "μg/mL" is microgram(s) per milliliter(s); "LB" is Luria broth; "μm" is micrometers, "nm" is nanometers; "OD" is optical density; "IPTG" is isopropyl-β-D-thio-galactoside; "g" is gravitational force; "mM" is millimolar; "SDS-PAGE" is sodium dodecyl sulfate polyacrylamide; "mg/mL" is milligrams per milliliters.

General Methods

Standard recombinant DNA and molecular cloning techniques used herein are well known in the art and are described by Sambrook, J. and Russell, D., Molecular Cloning: A Laboratory Manual, Third Edition, Cold Spring Harbor Laboratory Press, Cold Spring Harbor, NY (2001); and by Silhavy, T. J., Bennan, M. L. and Enquist, L. W., Experiments with Gene Fusions, Cold Spring Harbor Laboratory Cold Press Spring Harbor, NY (1984); and by Ausubel, F. M. et. al., Short Protocols in Molecular Biology, 5th Ed. Current Protocols and John Wiley and Sons, Inc., N.Y., 2002.

Materials and methods suitable for the maintenance and growth of bacterial cultures are also well known in the art. Techniques suitable for use in the following Examples may be found in Manual of Methods for General Bacteriology, Phillipp Gerhardt, R. G. E. Murray, Ralph N. Costilow, Eugene W. Nester, Willis A. Wood, Noel R. Krieg and G. Briggs Phillips, eds., (American Society for Microbiology Press, Washington, DC (1994)), Biotechnology: A Textbook of Industrial Microbiology by Wulf Crueger and Anneliese Crueger (authors), Second Edition, (Sinauer Associates, Inc., Sunderland, MA (1990)), and Manual of Industrial Microbiology and Biotechnology, Third Edition, Richard H. Baltz, Arnold L. Demain, and Julian E. Davis (Editors), (American Society of Microbiology Press, Washington, DC (2010).

**EXAMPLE 1**

**ENZYME TREATMENT OF PALM CENTRIFUGE SLUDGE**

It has been reported that enzyme treatment of centrifuge sludge from palm oil mills only can release oil if the sediment is washed with a detergent (SDS). In the current study different enzyme complexes (LAMINEX® BG2 and LAMINEX® 750) were tested with regard to release of oil from sludge sediment. The results showed that LAMINEX® 750 did not release a significant amount of oil from the sediment, but LAMINEX® BG2 released a significant amount of oil. With a dosage of 0.05% LAMINEX® BG2 and an incubation time of 20 hrs, it was possible to release more than 60% of the oil bound in the sediment without use of detergent. It was also possible to release oil from sediment of other waste streams in the palm oil mill including raw effluent (referred to as palm oil mill effluent - POME), which is a mixture of waste from the centrifuge sludge and the effluent from the sterilizer.

Pressed palm oil liquid contains palm oil, water and solid debris. Oil is separated from the pressed liquid by clarification where the oil is separated by gravity. The remaining oil is removed by centrifugation. The centrifuge (separator) sludge is a viscous liquid containing water, about 0.5-1.5% oil and about 5-10% non-oil solids.

For each ton of oil produced, 1-1.5 ton of centrifuge sludge is produced. The centrifuge sludge thus presents a substantial loss of oil.

It has been reported that the oil in the sludge is strongly associated with the solid material and cannot easily be released. C.C. Ho et al., JAOCS Vol. 69, No. 3 (1992) reported that oil in centrifuge sludge could only be released by enzyme treatment of the sludge using CELLUCLAST® from Novozymes, followed by a washing step using 0.01M SDS (sodium dodecyl sulfate). C.C. Ho et al. concluded that recovering oil by this process is not economically feasible bearing in mind the complexity and the minimal oil gain obtainable. Another disadvantage is the use of a detergent (SDS) as this is not acceptable for use in food. It could also create a number of problems in the further oil refining processes as it is very difficult to remove detergent from the oil.

In the current study, different enzymes were tested with regard to release of oil from centrifuge sludge without the use of detergent, which, according to C.C. Ho et al., is essential for the release of oil. In another embodiment, the present methods do not include, by proviso, the use of a detergent that is unacceptable for use in food, such as sodium dodecyl sulfate (SDS).

**MATERIAL**

PALM_4 Centrifuge sludge.
PALM_6 Centrifuge sludge.
PALM_7 Raw effluent (POME).
PALM_14 Raw effluent (POME)

Enzymes

LAMINEX® 750, (Available from DuPont Industrial Biosciences, Wilmington, Delaware, USA) A03193G190 batch 4861668300, 2037 CMC-DNS/g, 20 MVU/g. LAMINEX® 750 is a commercial preparation of an enzyme composition comprising: water 85 - 90 % (w/w); endo-1,3(4)-beta-glucanase 10 - 15 % (w/w), and sodium benzoate 0.25 % (w/w). LAMINEX® BG2, batch no 4902043555 (Available from DuPont Industrial Biosciences), 10166 CMC-DNS/g, 185 MVU/g. LAMINEX® BG2 is a commercial preparation of an enzyme complex capable of hydrolyzing beta-glucans and related carbohydrates. It is produced by fermentation with a selected strain of *Trichoderma reesei.* LAMINEX® BG2 comprises: water 59 - 71 % (w/w); cellulase 15 - 20 % (w/w); sorbitol 10.0 - 15.0 % (w/w); sodium chloride 4.0 - 5.0 % (w/w); and sodium benzoate 0.00 - 0.50 % (w/w).

## EXPERIMENTAL

### Enzyme treatment of sludge

40 gram sludge is scaled into a 250-mL Blue Cap flask. A magnetic bar is added and the sample placed in a heating block at 50 °C with magnetic stirring. Enzymes and water are added and the sample is incubated at 50 °C for 60 minutes. The sample is placed in a water bath at 85°C for 10 minutes to inactivate the enzyme.

The sample is transferred to a tarred 50-mL centrifuge tube, and centrifuged for 10 min. at 2300 rcf at 50 °C. The supernatant is decanted to another flask and the wall of the centrifuge tube is wiped with a towel. The sediment is scaled and freeze dried. The dry sediment is scaled.

### Analysis of oil in dry sediment

The freeze dried sediment was ground in an IKA mill at 25000 rpm for 30 seconds. 0.150 g ground sediment was scaled into a 15 centrifuge tube. Heptane:isopropanol (7.5 mL) 3:2 was added and placed on a Rotamix for 45 minutes. The tube was centrifuged at 800 rcf for 2 minutes. The organic solvent phase (1 mL) was transferred to a 1.5-mL vial and analyzed by HPTLC.

### HPTLC analysis of triglycerides

The sample (1.5 $\mu$L)was applied to the 10 x 20 cm Silica HPTLC plate. Standard solutions of 0.5% Palm Oil (0.2, 0.5, 0.8, 1.2, 1.8, 2.5, and 4 $\mu$L; respectively) were also applied to the HPTLC plate by an automatic TLC applicator. The plate was eluted (7 cm) with running buffer: Heptane: Methyl-tert-Butyl-Ether (MTBE): Acetic acid 70:30:1. After elution the plate was dried on a plate heater for 10 minutes at 160 °C, cooled, and dipped in 6% cupric acetate in 16% $H_3PO_4$. The plate was additionally dried for 6 minutes at 160 °C. The developed spots were quantified using a TLC plate scanner and components quantified based on calibration curves of the palm oil standard.

### HPLC analysis of glucose in water phase

Glucose in the supernatant from the centrifuged sludge was analyzed by HPLC using a Dionex Ultimate 3000 HPLC system (Thermo Fisher Scientific) equipped with a DGP-3600SD Dual-Gradient analytical pump, WPS-3000TSL thermostated autosampler, TCC-3000SD thermostated column oven, and a RI-101 refractive index detector (Shodex, JM Science). Chromeleon datasystem software (Version 6.80, DU10A Build 2826, 171948) was used for data acquisition and analysis. The column used was a RSO oligosaccharide column, Ag$^+$ 4% cross-linked (Phenomenex, The Netherlands) equipped with an analytical guard column (Carbo-Ag$^+$ neutral, AJ0-4491, Phenomenex, The Netherlands) at 70 °C. The column was eluted with double distilled water (filtered through a regenerated cellulose membrane of 0.45 $\mu$m and purged with helium gas) at a flow rate of 0.3 mL/min. Glucose was quantified by construction of a calibration curve from analysis of D-(+)-glucose (min 99.5%, Sigma no G8270-100G).

### Viscosity

Viscosity of palm sludge was analysed according to the following procedure:

(a) 25 g of a sample (e.g. a palm sludge) was transferred to an Alum cup fitted for Rapid Visco Analyser (RVA) (e.g. a RVA-4 available from Perten Instruments, which comprises double skirt paddles, with AA0384001 Alum ALS 38x68 plain can 38 mm cups, and with product number NS101783);
(b) The viscosity was measured on the RVA at 50°C and 160 rpm for 5 minutes;
(c) The viscosity was calculated as the average of viscosity measurements between 200 seconds and 300 seconds.

## RESULTS

Experiment 1

The effect of an enzyme complex, LAMINEX® BG2 on palm sludge, was studied in different dosages according to the recipe shown in Table 1.

Table 1. Recipes for Testing LAMINEX® BG2 on palm sludge.

| Recipe | | 1 | 2 | 3 | 4 | 5 | 6 |
|---|---|---|---|---|---|---|---|
| PALM 4 Centrifuge sludge | g | 50 | 50 | 50 | 50 | 50 | 50 |
| LAMINEX® BG2 | mL | 0 | 0.01 | 0.025 | 0.05 | 0.125 | 0.25 |

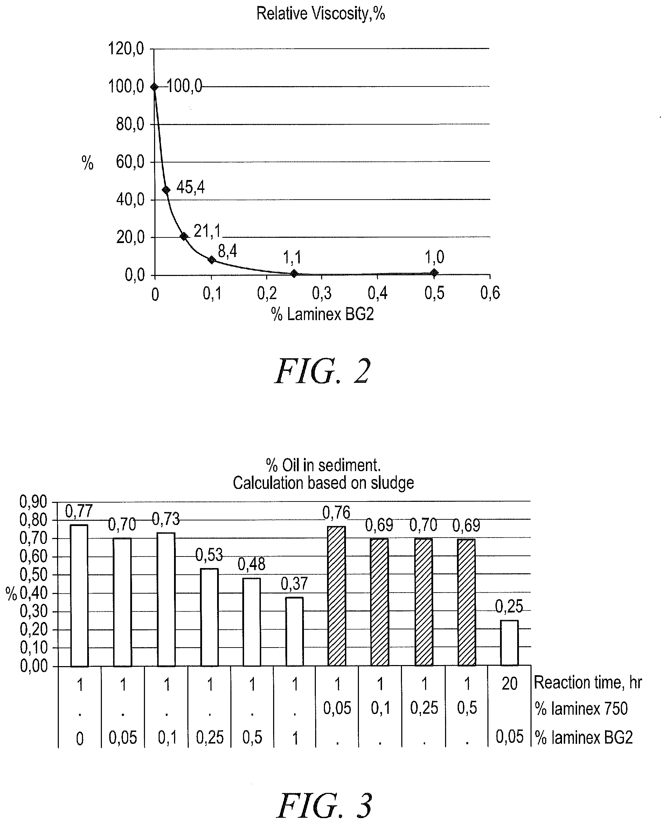

The enzyme was tested according to the procedure for "Enzyme treatment of sludge".
The impact of enzyme treatment on the relative viscosity of the sludge was measured with results shown in Figure 2. The viscosity of the sludge was 585 centiPoise (cP) but enzyme addition significantly decreased the viscosity and with the high dosage of enzyme (Figure 2), the sludge only had 1% of the original viscosity.
After enzyme treatment and centrifugation the amount of wet sediment and dry sediment was determined. Also % insoluble dry matter based on the sludge, % water in the sediment before drying, and % oil entrapped in the sediment based on the sludge were determined with the results shown in Table 2.

Table 2: Effect of LAMINEX® BG 2 on insoluble dry matter, water in sediment, and oil in sediment

| sample no. | LAMINEX® BG2 (%) | % insoluble dry matter in sediment | % water in sediment | % Oil in sediment |
|---|---|---|---|---|
| 1 | 0 | 4.73 | 83.8 | 0.63 |
| 2 | 0.02 | 4.40 | 82.4 | 0.58 |
| 3 | 0.05 | 4.20 | 81.6 | 0.63 |
| 4 | 0.1 | 3.92 | 80.5 | 0.56 |
| 5 | 0.25 | 2.93 | 76.0 | 0.47 |
| 6 | 0.5 | 2.75 | 75.8 | 0.34 |

The results in Table 2 confirm that LAMINEX® BG2 has a strong effect on the solubilization of dry matter, and more than 40% of the dry matter can be solubilized. The result from % water in the wet sediment also indicates that the water binding capacity of the insoluble material is strongly decreased. The amount of residual oil in the sediment confirms that the enzyme treatment contributes to release of the bound oil in the sediment, and at a dosage of 0.5% LAMINEX® BG2 more than 45% of the bound oil is released.

## EXPERIMENT 2

## EFFECT OF LAMINEX® BG2 AND LAMINEX® 750 ON PALM SLUDGE.

In this study the effect of LAMINEX® BG2 on centrifuge sludge was tested and compared with the effect of another enzyme complex, LAMINEX® 750, according to the recipe in Table 3.

Table 3 Recipe for test of LAMINEX® BG2 and LAMINEX® 750 in palm sludge

| | | 1 | 2 | 3 | 4 | 5 | 6 | 7 | 8 | 9 | 10 | 11 |
|---|---|---|---|---|---|---|---|---|---|---|---|---|
| Sludge Palm 4 | G | 40 | 40 | 40 | 40 | 40 | 40 | 40 | 40 | 40 | 40 | 40 |
| LAMINEX® BG2 | mL | 0 | 0.02 | 0.04 | 0.1 | 0.2 | 0.4 | | | | | 0.02 |
| LAMINEX® 750 | mL | | | | | | | 0.02 | 0.04 | 0.1 | 0.2 | |
| Water | mL | 0.8 | 0.78 | 0.76 | 0.7 | 0.6 | 0.4 | 0.78 | 0.76 | 0.7 | 0.6 ' | 0.78 |
| LAMINEX® BG2 | % | 0 | 0.05 | 0.1 | 0.25 | 0.5 | 1 | | | | | 0.05 |

(continued)

|  |  | 1 | 2 | 3 | 4 | 5 | 6 | 7 | 8 | 9 | 10 | 11 |
|---|---|---|---|---|---|---|---|---|---|---|---|---|
| LAMINEX® 750 | % |  |  |  |  |  |  | 0.05 | 0.1 | 0.25 | 0.5 |  |
| Reaction time | Hr | 1 | 1 | 1 | 1 | 1 | 1 | 1 | 1 | 1 | 1 | 1 |

The enzyme and sludge was incubated for 1 hr apart from one dosage of LAMINEX® BG2 that was treated for 20 hrs. The result from the enzyme treatment on amount of insoluble dry matter and oil in dry matter is shown in Table 4.

Table 4. Results from the enzyme treatment based on the amount of insoluble dry matter and oil.

|  | Enzyme | Reaction time | % Insoluble dry matter | % Water in wet sediment | % Oil in sediment calc. based on sludge |
|---|---|---|---|---|---|
| 1 | 0 | 1 | 4.82 | 85.6 | 0.77 |
| 2 | 0.05 Lam. BG2 | 1 | 4.32 | 83.6 | 0.70 |
| 3 | 0.1% Lam. BG2 | 1 | 4.00 | 82.7 | 0.73 |
| 4 | 0.25% Lam.BG2 | 1 | 3.04 | 74.9 | 0.53 |
| 5 | 0.5% Lam.BG2 | 1 | 2.88 | 72.9 | 0.48 |
| 6 | 1 % Lam.BG2 | 1 | 2.80 | 74.6 | 0.37 |
| 7 | 0.05% Lam.750 | 1 | 4.64 | 84.7 | 0.76 |
| 8 | 0.1% Lam.750 | 1 | 4.63 | 85.2 | 0.69 |
| 9 | 0.25% Lam.750 | 1 | 4.60 | 84.9 | 0.70 |
| 10 | 0.5% Lam.750 | 1 | 4.60 | 84.6 | 0.69 |
| 11 | 0.05% LAMINEX® BG2 | 20 | 2.81 | 71.8 | 0.25 |

The results confirmed that LAMINEX® BG2 had a strong impact on the amount of oil remaining in the dry matter, but LAMINEX® 750 had no effect on reduction of oil in dry matter (Figure 3). These results confirm that two different enzymes which both can reduce the viscosity of the sludge have very different abilities in releasing oil from sludge sediment. The results also indicate the enzyme reaction can be improved by extending the reaction time. LAMINEX® BG2 added at a dosage of 0.05% showed better effect than 1% LAMINEX® BG2 reacted for 1 hr.

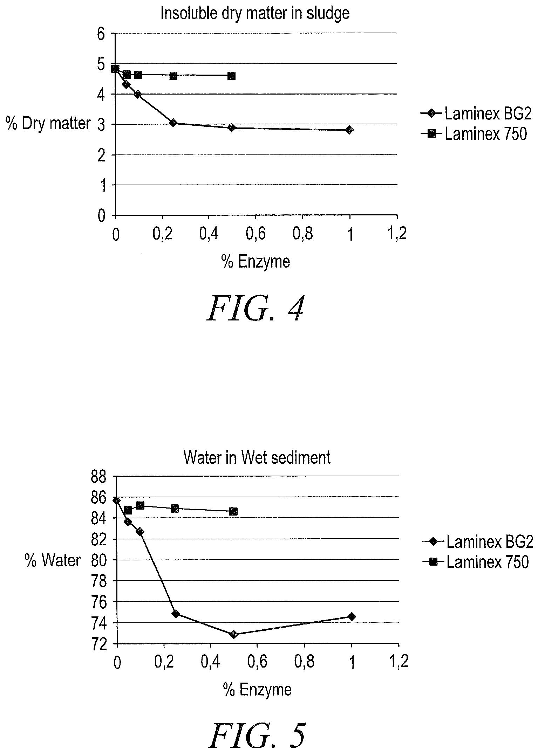

Incubation of palm sludge with LAMINEX® BG2 solubilizes a significant part of the insoluble substrate (Figure 4). The solubilization takes place already at a low dosage of LAMINEX® BG2 and at higher dosages to solubilization levels leaving approximately 2.8% insoluble in the sludge. The shape of the curve for LAMINEX® BG2 in Figure 4 might be explained by the fact that part of the insoluble carbohydrates are easily accessible for the solubilized enzyme, but the remaining carbohydrates are entrapped in lignin and thus not solubilized. It is known that palm fiber contains high amounts of lignin (25%). LAMINEX® 750, however, has very little impact on the solubilization of insoluble material in palm sludge.

Treatment of palm sludge with LAMINEX® BG2 had a significant effect on viscosity and increased solubilization of carbohydrates. The amount of sediment was reduced and it was observed that also the water binding of the sediment was reduced (Figure 5) with less water in the wet sediment. This effect could be advantageous in further use of the sediment as raw material or as fuel energy, because less water needs to be removed by evaporation.

The supernatant isolated after centrifugation was analyzed by HPLC and the amount of glucose was calculated with results shown in Table 5. The results indicate that addition of LAMINEX® BG2 produces significant amounts of glucose, which also correlates to the solubilization of insoluble dry matter. Treatment of palm sludge with LAMINEX® 750 however, did not contribute to any increase in amount of glycose.

Table 5. Analysis of glucose in supernatant from sludge treated with LAMINEX® BG2/LAMINEX® 750

|  | LAMINEX® BG2 | LAMINEX® 750 | Reaction time | Glucose in water phase |
|---|---|---|---|---|
|  | % | % | hr. | % |

(continued)

|  | LAMINEX® BG2 | LAMINEX® 750 | Reaction time | Glucose in water phase |
|---|---|---|---|---|
| 1 | 0 | . | 1 | 0.209 |
| 2 | 0.05 | . | 1 | 0.364 |
| 3 | 0.1 | . | 1 | 0.371 |
| 4 | 0.25 | . | 1 | 0.57 |
| 5 | 0.5 | . | 1 | 0.698 |
| 6 | 1 | . | 1 | 0.841 |
| 7 | . | 0.05 | 1 | 0.326 |
| 8 | . | 0.1 | 1 | 0.323 |
| 9 | . | 0.25 | 1 | 0.31 |
| 10 | . | 0.5 | 1 | 0.304 |
| 11 | 0.05 |  | 20 | 0.714 |

## EXPERIMENT 3

**LOW DOSAGES OF LAMINEX® BG2 WERE TESTED IN CENTRIFUGE SLUDGE WITH LONG INCUBATION TIME, AS SHOWN IN TABLE 6**

Table 6. Recipe. LAMINEX® BG2 in centrifuge sludge

|  |  | 1 | 2 | 3 |
|---|---|---|---|---|
| Centrifuge Sludge, PALM 4 | 9 | 40 | 40 | 40 |
| LAMINEX® BG2 | mL | 0.01 | 0.02 |  |
| Water | mL | 0.05 | 0.04 | 0.06 |
|  |  |  |  |  |
| % LAMINEX® BG2 | % | 0.025 | 0.05 | 0 |
| % KLM3(diluted1:10) | % |  |  | 0 |
| Incubation time | hr | 20 | 20 | 20 |

The experiment was conducted according to the procedure "Enzyme treatment of sludge" and analyzed with results shown in Table 7.

Table 7. Effect of LAMINEX® BG2 and KLM3 on amount dry matter, water in wet sediment, oil in dry matter, and glucose in supernatant

| test no. | % LAMINEX® BG2 | % KLM3 | % drymatter | % water in wet sediment | % Oil in sediment calc. based on sludge | % glucose in supernatant |
|---|---|---|---|---|---|---|
| 1 | 0.025 | 0 | 2.82 | 72.8 | 0.44 | 0.58 |
| 2 | 0.,05 | 0 | 2.74 | 73.6 | 0.35 | 0.,81 |
| 3 | 0 | 0 | 4.68 | 85.1 | 0.77 | 0.31 |

Addition of LAMINEX® BG2 to sludge in a dosage of 0.025% clearly reduced the amount of dry matter in the sample after 20 hrs incubation, and it was observed that addition of 0.05% LAMINEX® BG2 did not decrease the amount of dry matter much further. LAMINEX® BG2 also reduced the amount of oil bound in the sediment by more than 50%, but it was observed that addition of 0.05% LAMINEX® BG2 reduced the amount of oil more than by addition of 0.025% LAMINEX® BG2.

The amount of glucose in supernatant increases with increased amount of LAMINEX® BG2.

### EXPERIMENT 4

### LAMINEX® BG2 TESTED SLUDGE PALM 6.

LAMINEX® BG2 was test in another centrifuge sludge - PALM 6. The enzyme was tested in different dosages as provided in Table 8.

Table 8. Dosages for LAMINEX® BG2 to treat Sludge PALM 6

|  |  | 1 | 2 | 3 | 4 | 5 |
|---|---|---|---|---|---|---|
| Sludge, PALM 6 |  | 40 | 40 | 40 | 40 | 40 |
| LAMINEX® BG2 | mL | 0 | 0.02 | 0.04 | 0.1 | 0.2 |
| Water | mL | 0.4 | 0.38 | 0.36 | 0.3 | 0.2 |
|  |  |  |  |  |  |  |
| LAMINEX® BG2 | % | 0 | 0.05 | 0.1 | 0.25 | 0.5 |
| reaction time, Hr | hr | 1 | 1 | 1 | 1 | 1 |

The enzyme treatment of the sludge was conducted at 50 °C according to "Enzyme treatment of sludge" and amount of sediment and oil in sediment was analyzed with results shown in Table 9.

Table 9. Effect of LAMINEX® BG2 on solubilization of dry matter in sludge and effect of release of oil from the sludge.

| Test no | LAMINEX® BG2 | Dry matter in sediment | Water in wet sediment | Oil in sediment calc. based on sludge | Glucose in supernatant |
|---|---|---|---|---|---|
|  | % | % | % | % | % |
| 1 | 0 | 4.15 | 79.93 | 0.57 | 0.27 |
| 2 | 0.05 | 3.85 | 80.93 | 0.50 | 0.34 |
| 3 | 0.1 | 3.58 | 80.90 | 0.44 | 0.36 |
| 4 | 0.25 | 3.09 | 77.85 | 0.43 | 0.46 |
| 5 | 0.5 | 2.77 | 73.72 | 0.36 | 0.62 |

The sludge contains 0.72% oil of which 0.57% oil was bound in the sediment in the control sample without enzyme addition.

By enzyme treatment the amount of bound oil in sediment was reduced. With a dosage of 0.5% LAMINEX® BG2 the amount of oil bound in sediment was reduced to 0.36%. Addition of LAMINEX® BG2 also solubilized part of the insoluble dry matter, and the water binding in the sediment was reduced because of degradation of high polymer carbohydrates. This effect contributed to an increased amount of glucose in the supernatant.

### EXPERIMENT 5

### RAW EFFLUENT PALM 7 ADDED AT DIFFERENT DOSAGES AND LAMINEX® BG2

In the palm oil mill the waste stream from the separator is mixed with the waste stream from the sterilizer condensate and other minor waste water streams to produce palm oil mill effluent (POME). This mixed waste is called raw effluent, and in the following experiments the effect of enzyme on release of bound oil in the raw effluent was investigated.

A raw effluent PALM 7 was added at different dosages and LAMINEX® BG2 according to Table 10.

Table 10. Dosages for LAMINEX® BG2 to treat raw effluent PALM 7

|  |  | 1 | 2 | 3 | 4 | 5 | 6 | 7 |
|---|---|---|---|---|---|---|---|---|
| PALM 7, Raw effluent |  | 40 | 40 | 40 | 40 | 40 | 40 | 40 |
| LAMINEX® BG2 | mL | 0 | 0.02 | 0.04 | 0.1 | 0.2 | 0.4 | 0.02 |
| Water | mL | 0.4 | 0.38 | 0.36 | 0.3 | 0.2 | 0 | 0.38 |
|  |  |  |  |  |  |  |  |  |
| LAMINEX® BG2 | % | 0 | 0.05 | 0.1 | 0.25 | 0.5 | 1 | 0.05 |
| reaction time, Hr | hr | 1 | 1 | 1 | 1 | 1 | 1 | 20 |

The experiment was conducted at 50 °C according to the procedure for "Enzyme treatment of sludge". The amount of sediment and oil in sediment was analyzed with results shown in Table 11.

Table 11. Effect of LAMINEX® BG 2 on insoluble dry matter, water in wet sediment, and oil in sediment from Raw effluent, PALM 7

|  | LAMINEX® BG2 | Reaction time | Dry matter | Water in wet sediment | Oil in sediment, calculation based on raw effluent | Glucose in supernatant |
|---|---|---|---|---|---|---|
|  | % | hr | % | % | % | % |
| Sediment | 0 | 1 | 1.25 | 88.25 | 0.23 | 0.11 |
| Sediment | 0.05 | 1 | 0.86 | 82.49 | 0.20 | 0.16 |
| Sediment | 0.1 | 1 | 0.75 | 77.86 | 0.15 | 0.21 |
| Sediment | 0.25 | 1 | 0.81 | 77.24 | 0.16 | 0.24 |
| Sediment | 0.5 | 1 | 0.85 | 76.70 | 0.18 | 0.27 |
| Sediment | 1 | 1 | 0.96 | 77.09 | 0.18 | 0.36 |
| Sediment | 0.05 | 20 | 0.75 | 75.65 | 0.14 | n.a. |
| Raw effluent | PALM 7 |  | 3.28 |  | 0.35 |  |

The results in Table 11 indicate that the amount of dry matter in the raw effluent is much lower than in the centrifuge sludge because a significant dilution has occurred. The amount of oil in the raw effluent is 0.35% of which 0.23% is bound in the sediment. By enzyme treatment with LAMINEX® BG2 the amount of bound oil is the sediment is reduced to 0.14%. The data indicate that long incubation and low enzyme dosage is more advantageous than shorter incubation time with higher enzyme dosage. LAMINEX® BG2 treatment of raw effluent also contributes to increased glucose content in the supernatant.

## EXPERIMENT 6

**THE EFFECT OF LAMINEX® BG2 TESTED IN ANOTHER RAW EFFLUENT PALM 14.**

The experimental design is shown in Table 12.

Table 12. Experimental design for Experiment 6.

|  |  | 1 | 2 | 3 | 4 | 5 | 6 | 7 |
|---|---|---|---|---|---|---|---|---|
| PALM 14, Raw effluent, | g | 40 | 40 | 40 | 40 | 40 | 40 | 40 |
| LAMINEX® BG2 | mL | 0 | 0.02 | 0.04 | 0.1 | 0.2 | 0.4 | 0.02 |
| Water | mL | 0.4 | 0.38 | 0.36 | 0.3 | 0.2 | 0 | 0.38 |
| LAMINEX® BG2 | % | 0 | 0.05 | 0.1 | 0.25 | 0.5 | 1 | 0.05 |

(continued)

|  |  | 1 | 2 | 3 | 4 | 5 | 6 | 7 |
|---|---|---|---|---|---|---|---|---|
| Reaction time | hr | 1 | 1 | 1 | 1 | 1 | 1 | 20 |

This experiment with raw effluent was also conducted at 50°C according to the procedure "Enzyme treatment of sludge" and amount of sediment and oil in sediment was analyzed with results shown in Table 13.

Table 13. Results at 50 °C.

|  | LAMINEX® BG2 | Reaction time | Dry matter | Water in wet sediment | Oil in sediment calc. on raw effluent | Glucose in supernatant |
|---|---|---|---|---|---|---|
|  | % | hr | % | % | % | % |
| Sediment | 0 | 1 | 2.27 | 82.4 | 0.35 | <0.05 |
| Sediment | 0.05 | 1 | 1.90 | 82.7 | 0.28 | 0.074 |
| Sediment | 0.1 | 1 | 1.72 | 80.5 | 0.26 | 0.142 |
| Sediment | 0.25 | 1 | 1.65 | 77.9 | 0.25 | 0.242 |
| Sediment | 0.5 | 1 | 1.68 | 78.7 | 0.24 | 0.28 |
| Sediment | 1 | 1 | 1.83 | 78.1 | 0.28 | 0.304 |
| Sediment | 0.05 | 20 | 1.52 | 77.6 | 0.19 | 0.302 |
| Raw effluent | PALM 14 |  | 5.61 |  | 0.56 |  |

The raw effluent PALM 14 contains 5.61% dry matter and the oil content in the sample is 0.56%. 0.35% oil is bound in the sediment from the raw effluent. Addition of LAMINEX® BG2 reduced the amount of bound oil in sediment to 0.19%, and this experiment also shows that low enzyme dosage and long incubation time is preferable to shorter incubation time with higher enzyme dosage.
Glucose concentration in raw effluent supernatant also increased with increased enzyme dosage, and it is observed that low dosage (0.05%) enzyme and long incubation (20 hrs) produced the same amount of glucose as 1% enzyme and short reaction time (1 hr).

**CONCLUSION**

Centrifuge sludge from palm oil mills is known to contain 0.5-1.5% oil of which the main part is tightly bound to the insoluble components of the sludge. Enzymatic treatment of the sludge with a cellulase composition (comprising beta-glucanase and mannanase) product from *Trichoderma reesei,* LAMINEX® BG2, showed that it was possible to release a significant amount of the bound oil in such a way that the oil could be isolated by centrifugation. The oil release was dependent on the amount of enzyme added and the reaction time, and it was shown that more than 60% of the oil could be isolated in the supernatant after centrifugation.
Another effect of the enzyme treatment was that the viscosity of the sludge significantly dropped by the enzyme treatment. This effect also contributed to better separation in the centrifuge.
In conjunction with the release of bound oil, a significant amount of insoluble substances was solubilized (with a dosage of 0.05% LAMINEX® BG2 and 20 hrs incubation, more than 40% of the insoluble substances were solubilized). HPLC analyse of the supernatant showed that the amount of glucose increased from 0.21% to 0.97% after 1 hr treatment of sludge with 2% LAMINEX® BG2.
LAMINEX® BG2 was also tested in other waste streams from the palm oil mill including the raw effluent, which is a mixture of waste from the centrifuge sludge and the waste from the sterilizer.
LAMINEX® BG2 also released a significant amount of oil from this waste stream, and up to 50-60% oil could be isolated in the supernatant after centrifugation.
Various modifications and variations of the described methods and system of the present invention will be apparent to those skilled in the art without departing from the scope of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in biochemistry and biotechnology or related fields are intended to be within the scope of the following claims.

**Claims**

1. A method of improving palm oil yields, which method comprises:

    i. admixing an enzyme composition comprising cellulase activity and mannanase activity with a sludge;
    ii. incubating the admixture for between 1 to 20 hours at a temperature of between 50 °C to 95 °C; and
    iii. separating the oil from other components of the admixture.

2. A method according claim 1 wherein the sludge is one or more selected from the group consisting of separator sludge, sterilizer effluent, and palm oil mill effluent.

3. A method according to claim 1 or 2 wherein the oil is separated by centrifugation.

4. A method according to claim 3 wherein the centrifugation results in a triple phase composition comprising an oil layer, an aqueous layer, and a substantially solid sediment (or sludge) layer, preferably wherein the aqueous phase is enriched in soluble fermentable sugars.

5. The method according to any one of the preceding claims wherein: said enzyme composition further comprises pectinase activity; and/or said enzyme composition comprises low or no protease activity.

6. The method according to any one of the preceding claims wherein the enzyme composition is a crude or purified extract of a *Trichoderma reesei* fermentate.

7. The method according to any one of the preceding claims wherein the cellulase is one which reduces the amount of dry sediment (sludge dry matter) by at least 20% when 25000 CMC-DNS/kg substrate is added to sludge and incubated for 1 hr at 50°C.

8. The method according to any one of the preceding claims wherein when the enzyme composition comprises mannanase, the enzyme composition comprises a minimum level of mannanase activity which when added to the substrate give a mannanase concentration of at least about 200 MVR/kg substrate.

9. Use of an enzyme composition comprising cellulase activity and mannanase activity as defined in any one of claims 1 or 5 to 8 in combination with a sludge in the manufacture of palm oil for improving palm oil yield, for improving separation of palm oil from the sludge, for producing an aqueous phase with improved fermentable sugars, or for improving the speed of oil separation.

10. A use according to claim 9 wherein the sludge is one or more selected from the group consisting of separator sludge, sterilizer effluent, and palm oil mill effluent.

11. A use according to claim 9 or claim 10 wherein the oil is separated by centrifugation.

12. A use according to claim 11 wherein the centrifugation results in a triple phase composition comprising an oil layer, an aqueous layer, and a substantially solid sediment (or sludge) layer, preferably wherein the aqueous phase is enriched in soluble fermentable sugars.

13. A method for producing a fermentation product comprising fermenting a feedstock comprising said aqueous phase obtainable by the method according to any one of claims 1-8 and recovering said fermentation product.

14. A method according to claim 13 wherein said feedstock further comprises empty palm fruit bunches or processed empty palm fruit bunches.

15. A method according to claim 13 or claim 14 wherein said fermentation product is a compound selected from the group consisting of an alcohol, an organic acid, an antibiotic, an antimicrobial, bioinsecticide, a solvent, and a polyhydroxyalkanoate.

**16.** A method according to any one of claims 13 to 15 wherein the feedstock is subjected to one or more processing steps selected from the group consisting of milling, cooking, and saccharification.

**17.** A method according claim 15 or claim 16 wherein the alcohol is a biofuel.

**Patentansprüche**

**1.** Verfahren zum Verbessern der Ausbeute von Palmöl, wobei das Verfahren umfasst:

> i. Zumischen einer Enzym-Zusammensetzung, die Cellulase-Aktivität und Mannanase-Aktivität umfasst, zu einem Schlamm;
> ii. Inkubieren der Zumischung zwischen 1 bis 20 Stunden bei einer Temperatur zwischen 50° und 95 °C; und
> iii. Abtrennen des Öls von anderen Komponenten der Zumischung.

**2.** Verfahren nach Anspruch 1, wobei der Schlamm einer oder mehrere ist, ausgewählt aus der Gruppe bestehend aus Separatorschlamm, Sterilisatorablauf und Palmölmühlenablauf.

**3.** Verfahren nach Anspruch 1 oder 2, wobei das Öl durch Zentrifugation abgetrennt wird.

**4.** Verfahren nach Anspruch 3, wobei die Zentrifugation eine dreiphasige Zusammensetzung ergibt, die eine Ölschicht, eine wässrige Schicht und eine Schicht von weitgehend festem Sediment (oder von Schlamm) umfasst, wobei die wässrige Phase bevorzugt mit löslichen fermentierbaren Zuckern angereichert ist.

**5.** Verfahren nach einem der vorgehenden Ansprüche, wobei: die Enzym-Zusammensetzung ferner Pektinase-Aktivität umfasst; und/oder die Enzym-Zusammensetzung geringe oder keine Protease-Aktivität umfasst.

**6.** Verfahren nach einem der vorgehenden Ansprüche, wobei die Enzym-Zusammensetzung roher oder gereinigter Extrakt von *Trichoderma reesei*-Fermentat ist.

**7.** Verfahren nach einem der vorgehenden Ansprüche, wobei die Cellulase eine solche ist, die die Menge von Trockensediment (Trockensubstanz von Schlamm) mindestens um 20% verringert, wenn 25.000 CMC-DNS/kg Substrat zum Schlamm zugesetzt und für eine Stunde bei 50 °C inkubiert werden.

**8.** Verfahren nach einem der vorgehenden Ansprüche, wobei, wenn die Enzym-Zusammensetzung Mannanase umfasst, die Enzym-Zusammensetzung einen Mindestbetrag an Mannanase-Aktivität umfasst, die, wenn sie dem Substrat zugegeben wird, eine Mannanase-Konzentration von mindestens etwa 200 MVR/kg Substrat ergibt.

**9.** Verwendung einer Enzym-Zusammensetzung, umfassend Cellulase-Aktivität und Mannanase-Aktivität, wie nach einem der Ansprüche 1 oder 5 bis 8 festgelegt ist, in Kombination mit einem Schlamm bei der Herstellung von Palmöl zum Verbessern der Palmölausbeute, zum Verbessern der Abtrennung von Palmöl aus dem Schlamm, zum Erzeugen einer wässrigen Phase mit gesteigerten fermentierbaren Zuckern oder zum Verbessern der Geschwindigkeit der Öl-Abtrennung.

**10.** Verwendung nach Anspruch 9, wobei der Schlamm einer oder mehrere ist, ausgewählt aus der Gruppe bestehend aus Separatorschlamm, Sterilisatorablauf und Palmölmühlenablauf.

**11.** Verwendung nach Anspruch 9 oder Anspruch 10, wobei das Öl durch Zentrifugation abgetrennt wird.

**12.** Verwendung nach Anspruch 11, wobei die Zentrifugation eine dreiphasige Zusammensetzung ergibt, die eine Ölschicht, eine wässrige Schicht und eine Schicht von weitgehend festem Sediment (oder von Schlamm) aufweist, wobei die wässrige Phase bevorzugt mit löslichen fermentierbaren Zuckern angereichert ist.

**13.** Verfahren zum Herstellen eines Fermentationsprodukts, umfassend das Fermentieren eines Ausgangsmaterials, umfassend die wässrige Phase, die mit Hilfe des Verfahrens nach einem der Ansprüche 1 bis 8 erhalten werden kann, und Gewinnen des Fermentationsprodukts.

**14.** Verfahren nach Anspruch 13, bei dem das Ausgangsmaterial ferner leere Palmfruchtbündel oder verarbeitete leere Palmfruchtbündel umfasst.

**15.** Verfahren nach Anspruch 13 oder Anspruch 14, wobei das Fermentationsprodukt eine Verbindung ist, die ausgewählt ist aus der Gruppe bestehend aus einem Alkohol, einer organischen Säure, einem Antibiotikum, einem antimikrobiellen Mittel, einem Bioinsektizid, einem Lösungsmittel und einem Polyhydroxyalkanoat.

**16.** Verfahren nach einem der Ansprüche 13 bis 15, wobei das Ausgangsmaterial einem oder mehreren Verarbeitungsschritten unterzogen wird, die ausgewählt sind aus der Gruppe bestehend aus Mahlen, Kochen und Verzuckern.

**17.** Verfahren nach Anspruch 15 oder Anspruch 16, wobei der Alkohol ein Biokraftstoff ist.

**Revendications**

**1.** Méthode pour l'amélioration des rendements d'huile de palme, laquelle méthode comprend:

> i. le mélange d'une composition d'enzymes comprenant l'activité d'une cellulase et l'activité d'une mannanase avec une boue;
> ii. l'incubation du mélange pendant entre 1 et 20 heures à une température entre 50°C et 95°C; et
> iii. la séparation de l'huile à partir des autres composants du mélange.

**2.** Méthode selon la revendication 1, dans laquelle la boue est un ou plusieurs choisis dans le groupe constitué de boue de séparateur, d'effluent de stérilisateur et d'effluent de broyeur d'huile de palme.

**3.** Méthode selon la revendication 1 ou 2, dans laquelle l'huile est séparée par centrifugation.

**4.** Méthode selon la revendication 3, dans laquelle la centrifugation conduit à une composition à triple phase comprenant une couche d'huile, une couche aqueuse et une couche de sédiment substantiellement solide (ou de boue), de préférence dans laquelle la phase aqueuse est enrichie en sucres fermentables solubles.

**5.** Méthode selon l'une quelconque des revendications précédentes, dans laquelle: ladite composition d'enzymes comprend en outre l'activité d'une pectinase; et/ou ladite composition d'enzymes comprend peu ou pas d'activité de protéase.

**6.** Méthode selon l'une quelconque des revendications précédentes, dans laquelle la composition d'enzymes est un extrait brut ou purifié d'un produit de fermentation de *Trichoderma reesei.*

**7.** Méthode selon l'une quelconque des revendications précédentes, dans laquelle la cellulase est une qui réduit la quantité de sédiment sec (matière sèche de boue) d'au moins 20% lorsque 25000 CMC-DNS/kg de substrat sont ajoutés à la boue et le mélange incubé pendant 1 h à 50°C.

**8.** Méthode selon l'une quelconque des revendications précédentes, dans laquelle, lorsque la composition d'enzymes comprend une mannanase, la composition d'enzymes comprend un niveau minimum d'activité de mannanase qui, lorsqu'elle est ajoutée au substrat, donne une concentration de mannanase d'au moins environ 200 MVR/kg de substrat.

**9.** Utilisation d'une composition d'enzymes comprenant l'activité d'une cellulase et l'activité d'une mannanase telle que définie dans l'une quelconque des revendications 1 ou 5 à 8 en combinaison avec une boue dans la fabrication d'huile de palme pour améliorer le rendement d'huile de palme, pour améliorer la séparation d'huile de palme à partir de la boue, pour produire une phase aqueuse avec des sucres fermentables augmentés ou pour améliorer la vitesse de séparation d'huile.

**10.** Utilisation selon la revendication 9, dans laquelle la boue est un ou plusieurs choisis dans le groupe constitué de boue de séparateur, d'effluent de stérilisateur et d'effluent de broyeur d'huile de palme.

**11.** Utilisation selon la revendication 9 ou la revendication 10, dans laquelle l'huile est séparée par centrifugation.

**12.** Utilisation selon la revendication 11, dans laquelle la centrifugation conduit à une composition à triple phase comprenant une couche d'huile, une couche aqueuse et une couche de sédiment substantiellement solide (ou de boue), de préférence dans laquelle la phase aqueuse est enrichie en sucres fermentables solubles.

13. Méthode pour la production d'un produit de fermentation comprenant la fermentation d'une charge d'alimentation comprenant ladite phase aqueuse pouvant être obtenue par la méthode selon l'une quelconque des revendications 1-8 et la récupération dudit produit de fermentation.

14. Méthode selon la revendication 13, dans laquelle ladite charge d'alimentation comprend en outre des grappes de fruits de palmier vides ou des grappes de fruits de palmier vides transformées.

15. Méthode selon la revendication 13 ou la revendication 14, dans laquelle ledit produit de fermentation est un composé choisi dans le groupe constitué d'un alcool, d'un acide organique, d'un antibiotique, d'un antimicrobien, d'un bio-insecticide, d'un solvant et d'un polyhydroxyalcanoate.

16. Méthode selon l'une quelconque des revendications 13 à 15, dans laquelle la charge d'alimentation est soumise à une ou plusieurs étapes de transformation choisies dans le groupe constitué du broyage, de la cuisson et de la saccharification.

17. Méthode selon la revendication 15 ou la revendication 16, dans laquelle l'alcool est un biocarburant.

FIG. 1

Relative Viscosity,%

FIG. 2

% Oil in sediment.
Calculation based on sludge

| Reaction time, hr | 1 | 1 | 1 | 1 | 1 | 1 | 1 | 1 | 1 | 1 | 20 |
| % laminex 750 | | | | | | | 0,05 | 0,1 | 0,25 | 0,5 | 0,05 |
| % laminex BG2 | 0 | 0,05 | 0,1 | 0,25 | 0,5 | 1 | . | . | . | . | 0,05 |

FIG. 3

Insoluble dry matter in sludge

— Laminex BG2
— Laminex 750

*FIG. 4*

Water in Wet sediment

— Laminex BG2
— Laminex 750

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6001640 A
- WO 2006008508 A
- WO 2009081094 A
- US 5028539 A
- US 5000000 A
- US 5424202 A
- US 5487989 A
- US 5482846 A
- US 5554520 A
- US 5514583 A
- US 08363868 B
- US 08475925 B
- US 08218914 B
- US 941251 P
- US 7892812 B
- WO 9217573 A
- WO 9201793 A
- WO 9119782 A
- WO 9421785 A
- US 7846705 B
- EP 0575323 B1
- WO 9117243 A

**Non-patent literature cited in the description**

- **HO et al.** *JAOCS,* March 1992, vol. 69 (3
- **WU et al.** *Biotechnology Advances,* 2009, vol. 27, 40-52
- **MIGNEAULT et al.** *BioTechniques,* 2004, vol. 37 (790), 802
- **SINGLETON et al.** Dictionary of Microbiology and Molecular Biology. John Wiley and Sons, 1994, 20
- **HALE ; MARHAM.** The Harper Collins Dictionary of Biology. Harper Perennial, 1991
- Palm Oil: Production, Processing, Characterization, and Uses. AOCS Monograph Series on Oilseeds. Amer Oil Chemists Society, 2012, vol. 5
- **LOMBARD V et al.** Carbohydrate Active Enzymes Database. *Nucleic Acids Res,* 2014, vol. 42, D490-D495
- Cellulose- binding domains: classification and properties. **TOMME et al.** Enzymatic Degradation of Insoluble Polysaccharides. American Chemical Society, 1995, 142-163
- **GHOSE.** *Pure and Appl. Chem.,* 1987, vol. 59, 257-268
- **SCHMID et al.** *Adv. Biochem Eng.,* 1979, vol. 12, 41, , 118
- **SAMBROOK, J. ; RUSSELL, D.** Molecular Cloning: A Laboratory Manual. Cold Spring Harbor Laboratory Press, 2001
- **SILHAVY, T. J. ; BENNAN, M. L. ; ENQUIST, L. W.** Experiments with Gene Fusions. Cold Spring Harbor Laboratory, 1984
- **AUSUBEL, F. M.** Short Protocols in Molecular Biology. Current Protocols and John Wiley and Sons, Inc, 2002
- Manual of Methods for General Bacteriology. American Society for Microbiology Press, 1994
- **WULF CRUEGER ; ANNELIESE CRUEGER.** Biotechnology: A Textbook of Industrial Microbiology. Sinauer Associates, Inc, 1990
- Manual of Industrial Microbiology and Biotechnology. American Society of Microbiology Press, 2010
- **C.C. HO et al.** *JAOCS,* 1992, vol. 69 (3